# EUROPÄISCHE PATENTSCHRIFT

(11) **EP 2 958 872 B1**
(45) Veröffentlichungstag und Bekanntmachung des Hinweises auf die Patenterteilung: **01.03.2017**
(21) Anmeldenummer: 13811933.4
(22) Anmeldetag: 19.12.2013
(51) Int. Cl.: C03C 17/34, B32B 17/06, C03C 17/36, C08J 7/00

(54) **SCHEIBE MIT WÄRMESTRAHLUNG REFLEKTIERENDER BESCHICHTUNG**
PANE WITH COATING THAT REFLECTS THERMAL RADIATION
VITRE AVEC UN REVÊTEMENT RÉFLÉCHISSANT UN RAYONNEMENT THERMIQUE

(30) Priorität: 20.02.2013 EP 13155969
(43) Veröffentlichungstag der Anmeldung: 30.12.2015
(73) Patentinhaber: Saint-Gobain Glass France, 92400 Courbevoie (FR)
(72) Erfinder: MELCHER, Martin, 52134 Herzogenrath (DE); HAGEN, Jan, 53123 Bonn (DE); VINCENT, Julia, 52062 Aachen (DE)
(74) Vertreter: Gebauer, Dieter Edmund
(86) Internationale Anmeldenummer: PCT/EP2013/077351
(87) Internationale Veröffentlichungsnummer: WO 2014/127867

(56) Entgegenhaltungen:
- WO-A1-2011/105991
- WO-A2-2012/022876
- US-A1- 2005 123 772
- US-A1- 2008 070 045
- US-B1- 6 572 990

## Beschreibung

Die Erfindung betrifft eine Scheibe mit Wärmestrahlung reflektierender Beschichtung, ein Verfahren zu deren Herstellung und die Verwendung einer Scheibe mit einer solchen Beschichtung.

Der Innenraum eines Kraftfahrzeugs kann sich im Sommer bei hohen Umgebungstemperaturen und intensiver direkter Sonneneinstrahlung stark erwärmen. Ist die Außentemperatur geringer als die Temperatur im Fahrzeuginnenraum, was insbesondere im Winter auftritt, so wirkt eine kalte Scheibe als Wärmesenke, die von den Insassen als unangenehm empfunden wird. Auch muss eine hohe Heizleistung der Klimaanlage bereitgestellt werden, um eine Auskühlung des Innenraums über die Fahrzeugscheiben zu vermeiden.

Wärmestrahlung reflektierende Beschichtungen (sogenannte Low-E-Beschichtungen) sind bekannt. Eine solche Beschichtung reflektiert einen erheblichen Teil der Sonnenstrahlung insbesondere im Infrarotbereich, was im Sommer zu einer verringerten Erwärmung des Fahrzeuginnenraums führt. Die Beschichtung verringert außerdem die Aussendung von langwelliger Wärmestrahlung einer erwärmten Scheibe in den Fahrzeuginnenraum hinein, wenn die Beschichtung auf der dem Fahrzeuginnenraum zugewandten Oberfläche einer Scheibe aufgebracht ist. Eine solche Beschichtung verringert außerdem bei niedrigen Außentemperaturen im Winter die Abstrahlung der Wärme des Innenraums in die äußere Umgebung.

Aus ästhetischen oder thermischen Gründen kann es gewünscht sein, dass eine Fahrzeugscheibe eine verminderte Lichttransmission aufweist. Dies ist beispielsweise bei hinteren Seitenscheiben, Heckscheiben oder Dachscheiben häufig der Fall. Eine solche Scheibe kann durch die Verwendung einer transmissionsmindernden Wärmestrahlung reflektierenden Beschichtung erzeugt werden. Transmissionsmindernde Wärmestrahlung reflektierende Beschichtungen, welche funktionelle Schichten aus Niob, Tantal, Nickel, Chrom, Zirkonium oder Legierungen daraus enthalten, sind dem Fachmann bekannt, beispielsweise aus US7592068B2, US7923131B2 und WO2004076174A1. Aufgrund der geringen Lichttransmission der Beschichtung weisen Schichtdefekte, welche insbesondere herstellungsbedingt vorhanden sein können, einen unerwünscht hohen Kontrast auf. Bereits sehr kleine Oberflächen von Verbundscheiben beschränkt. Eine Anwendung auf der innenraumseitigen Oberfläche einer Scheibe ist daher nicht möglich.

US 2005/0123772 A1 und US 2008/0070045 A1 beschreiben Scheiben mit Wärmestrahlung reflektierende Beschichtungen, die eine Absorptionsschicht enthalten.

Die Aufgabe der vorliegenden Erfindung besteht darin, eine verbesserte Scheibe mit Wärmestrahlung reflektierender Beschichtung bereitzustellen, wobei die Wärmestrahlung reflektierende Beschichtung die Transmission der Scheibe im sichtbaren Spektralbereich herabsetzt. Die Beschichtung soll zudem korrosionsbeständig sein und beim Biegen und Vorspannen der Scheibe nicht beschädigt werden. Außerdem soll ein Verfahren zur Herstellung der Scheibe bereitgestellt werden.

Die Aufgabe der vorliegenden Erfindung wird erfindungsgemäß durch eine Scheibe mit Wärmestrahlung reflektierender Beschichtung gemäß Anspruch 1 gelöst. Bevorzugte Ausführungen gehen aus den Unteransprüchen hervor.

Die erfindungsgemäße Scheibe mit Wärmestrahlung reflektierender Beschichtung umfasst ein Substrat und mindestens eine Wärmestrahlung reflektierende Beschichtung auf mindestens einer der Oberflächen des Substrats, wobei die Beschichtung ausgehend vom Substrat mindestens
- eine untere dielektrische Schicht,
- eine funktionelle Schicht, die zumindest ein transparentes, elektrisch leitfähiges Oxid enthält, und
- eine obere dielektrische Schicht
umfasst,
und wobei mindestens eine Abdunklungsschicht zwischen der unteren dielektrischen Schicht und der funktionellen Schicht und/oder zwischen der funktionellen Schicht und der oberen dielektrischen Schicht angeordnet ist,
und wobei die Abdunklungsschicht zumindest ein Metall, ein Metallnitrid und/oder ein Metallcarbid mit einem Schmelzpunkt von größer als 1900 °C und einem spezifischen elektrischen Widerstand von kleiner als 500 µOhm*cm enthält.

Die erfindungsgemäße Wärmestrahlung reflektierende Beschichtung ist ein Schichtstapel, der mindestens die folgenden Einzelschichten in der angegebenen Reihenfolge ausgehend vom Substrat umfasst:
Oberflächen von Verbundscheiben beschränkt. Eine Anwendung auf der innenraumseitigen Oberfläche einer Scheibe ist daher nicht möglich.

Die Aufgabe der vorliegenden Erfindung besteht darin, eine verbesserte Scheibe mit Wärmestrahlung reflektierender Beschichtung bereitzustellen, wobei die Wärmestrahlung reflektierende Beschichtung die Transmission der Scheibe im sichtbaren Spektralbereich herabsetzt. Die Beschichtung soll zudem korrosionsbeständig sein und beim Biegen und Vorspannen der Scheibe nicht beschädigt werden. Außerdem soll ein Verfahren zur Herstellung der Scheibe bereitgestellt werden.

Die Aufgabe der vorliegenden Erfindung wird erfindungsgemäß durch eine Scheibe mit Wärmestrahlung reflektierender Beschichtung gemäß Anspruch 1 gelöst. Bevorzugte Ausführungen gehen aus den Unteransprüchen hervor.

Die erfindungsgemäße Scheibe mit Wärmestrahlung reflektierender Beschichtung umfasst ein Substrat und mindestens eine Wärmestrahlung reflektierende Beschichtung auf mindestens einer der Oberflächen des Substrats, wobei die Beschichtung ausgehend vom Substrat mindestens
- eine untere dielektrische Schicht,
- eine funktionelle Schicht, die zumindest ein transparentes, elektrisch leitfähiges Oxid enthält, und
- eine obere dielektrische Schicht
umfasst,
und wobei mindestens eine Abdunklungsschicht unterhalb der unteren dielektrischen Schicht, zwischen der unteren dielektrischen Schicht und der funktionellen Schicht, zwischen der funktionellen Schicht und der oberen dielektrischen Schicht und/oder oberhalb der oberen dielektrischen Schicht angeordnet ist,
und wobei die Abdunklungsschicht zumindest ein Metall, ein Metallnitrid und/oder ein Metallcarbid mit einem Schmelzpunkt von größer als 1900 °C und einem spezifischen elektrischen Widerstand von kleiner als 500 µOhm*cm enthält.

Die erfindungsgemäße Wärmestrahlung reflektierende Beschichtung ist ein Schichtstapel, der mindestens die folgenden Einzelschichten in der angegebenen Reihenfolge ausgehend vom Substrat umfasst:
- eine untere dielektrische Schicht,
- oberhalb der unteren dielektrischen Schicht eine funktionelle Schicht, die zumindest ein transparentes, elektrisch leitfähiges Oxid (TCO) enthält, und
- oberhalb der funktionellen Schicht eine obere dielektrische Schicht.
Die Beschichtung umfasst außerdem mindestens eine erfindungsgemäße Abdunklungsschicht.

Ist eine erste Schicht oberhalb einer zweiten Schicht angeordnet, so bedeutet dies im Sinne der Erfindung, dass die erste Schicht weiter vom Substrat entfernt angeordnet ist als die zweite Schicht. Ist eine erste Schicht unterhalb einer zweiten Schicht angeordnet ist, so bedeutet dies im Sinne der Erfindung, dass die zweite Schicht weiter vom Substrat entfernt angeordnet ist als die erste Schicht.

Ist eine erste Schicht oberhalb oder unterhalb einer zweiten Schicht angeordnet, so bedeutet dies im Sinne der Erfindung nicht notwendigerweise, dass sich die erste und die zweite Schicht in direktem Kontakt miteinander befinden. Es können eine oder mehrere weitere Schichten zwischen der ersten und der zweiten Schicht angeordnet sein, sofern dies nicht explizit ausgeschlossen wird.

Die oberste Schicht der Beschichtung ist im Sinne der Erfindung diejenige Schicht, welche den größten Abstand zum Substrat aufweist. Die unterste Schicht der Beschichtung ist im Sinne der Erfindung diejenige Schicht, welche den geringsten Abstand zum Substrat aufweist.

Die angegebenen Werte für den spezifischen elektrischen Widerstand sind bei einer Temperatur von 20 °C gemessen. Die angegebenen Werte für Brechungsindizes sind bei einer Wellenlänge von 550 nm gemessen.

Die angegebenen Werte für den Schmelzpunkt und den spezifischen elektrischen Widerstand kann der Fachmann beispielsweise Tabellenwerken oder Datenblättern entnehmen. Dort sind typischerweise die Werte für einen Festkörper angegeben. Im Falle dünner Schichten können der Schmelzpunkt und der spezifische elektrische Widerstand davon abweichen. Die tabellierten Werte für den Festkörper geben dem Fachmann aber dennoch ein hinreichendes Kriterium für die Auswahl geeigneter Materialien für die erfindungsgemäße Abdunklungsschicht. Die angegebenen Werte für den Schmelzpunkt und den spezifischen elektrischen Widerstand sind in diesem Sinne zu verstehen.

Enthält eine Schicht oder ein sonstiges Element zumindest ein Material, so schließt das im Sinne der Erfindung den Fall ein, dass die Schicht aus dem Material besteht.

Das erfindungsgemäße Metall, Metallnitrid und/oder Metallcarbid der Abdunklungsschicht weist einen geringen spezifischen elektrischen Widerstand und damit eine deutliche elektrische Leitfähigkeit auf. Durch eine solche leitfähige Abdunklungsschicht wird die Transmission im sichtbaren Spektralbereich der Wärmestrahlung reflektierenden Beschichtung herabgesetzt, insbesondere durch Absorption und/oder Reflexion. Natürlich kann die Abdunklungsschicht auch die Transmission in anderen Spektralbereichen herabsetzen, beispielsweise dem Infrarotbereich. Der Transmissionsgrad kann dabei durch die Wahl von Anzahl, Dicke sowie Material der Abdunklungsschichten eingestellt werden. Es sind somit auch sehr dunkle Scheiben realisierbar, insbesondere, wenn die erfindungsgemäße Beschichtung auf getönten Scheiben eingesetzt wird. Das ist ein großer Vorteil der Erfindung.

Das erfindungsgemäße Metall, Metallnitrid und/oder Metallcarbid der Abdunklungsschicht weist zudem einen hohen Schmelzpunkt auf. Solche Abdunklungsschichten sind vorteilhaft korrosions- und oxidationsbeständig. Die beschichtete Scheibe kann daher auch einer Temperaturbehandlung, einem Biegeprozess und/oder einem Vorspannprozess unterzogen werden, ohne dass die Beschichtung beschädigt wird (etwa durch Risse in der Abdunklungsschicht) oder die Lichttransmission infolge von Oxidation der Abdunklungsschicht wieder erhöht wird. Das ist ein weiterer großer Vorteil der vorliegenden Erfindung.

Die erfindungsgemäße Scheibe ist bevorzugt dafür vorgesehen, in einer Öffnung, beispielsweise eines Fahrzeugs oder eines Gebäudes, den Innenraum gegenüber der äußeren Umgebung abzutrennen. Die erfindungsgemäße Beschichtung ist bevorzugt auf der Oberfläche des Substrats angeordnet, die dafür vorgesehen ist, in Einbaulage der Scheibe dem Innenraum zugewandt zu sein. Das ist besonders vorteilhaft im Hinblick auf den thermischen Komfort in dem Innenraum. Die Oberfläche, die dafür vorgesehen ist, in Einbaulage der Scheibe dem Innenraum zugewandt zu sein, wird im Sinne der Erfindung als innenraumseitige Oberfläche bezeichnet. Die erfindungsgemäße Beschichtung kann dabei bei hohen Außentemperaturen und Sonneneinstrahlung besonders effektiv die von der gesamten Scheibe in Richtung des Innenraums abgestrahlte Wärmestrahlung zumindest teilweise reflektieren. Bei niedrigen Außentemperaturen kann die erfindungsgemäße Beschichtung effektiv die aus dem Innenraum abgestrahlte Wärmestrahlung reflektieren und somit die Wirkung der kalten Scheibe als Wärmesenke verringern.

Die innenraumseitige Emissivität der erfindungsgemäßen Scheibe beträgt bevorzugt kleiner oder gleich 35%, besonders bevorzugt kleiner oder gleich 25%, ganz besonders bevorzugt kleiner oder gleich 20%. Mit innenraumseitiger Emissivität wird dabei das Maß bezeichnet, welches angibt, wie viel Wärmestrahlung die Scheibe in Einbaulage im Vergleich zu einem idealen Wärmestrahler (einem schwarzen Körper) in einen Innenraum, beispielsweise eines Gebäudes oder eines Fahrzeugs abgibt. Unter Emissivität wird im Sinne der Erfindung der normale Emissionsgrad bei 283 K nach der Norm EN 12898 verstanden.

Die erfindungsgemäße Scheibe weist in einer vorteilhaften Ausgestaltung eine Transmission im sichtbaren Spektralbereich von kleiner als 25 %, bevorzugt kleiner als 15 %, besonders bevorzugt kleiner als 10 %, ganz besonders bevorzugt kleiner als 8 % und insbesondere kleiner als 6 % auf. Die Erfindung ist besonders vorteilhaft für Scheiben mit einer Transmission von kleiner als 10 %. Solche Scheibe sind nämlich alleine durch ein getöntes Substrat schwer zu realisieren, weil dermaßen stark getönte Substrate kommerziell typischerweise nicht erhältlich sind. Scheiben mit einer solch geringen Transmission können insbesondere als Seitenscheibe, Heckscheibe oder Dachscheibe eines Kraftfahrzeugs oder auch in Gebäuden gewünscht sein.

Der Wert der erfindungsgemäßen Scheibe für den Gesamtenergieeintrag durch Sonnenstrahlung beträgt bevorzugt kleiner 50 %, besonders bevorzugt kleiner 40 %, ganz besonders bevorzugt kleiner 30 %. Dieser Wert ist dem Fachmann auch als TTS-Wert ("total transmitted sun") bekannt.

Der Flächenwiderstand der erfindungsgemäßen Beschichtung beträgt bevorzugt von 10 Ohm/Quadrat bis 50 Ohm/Quadrat, besonders bevorzugt von 15 Ohm/Quadrat bis 30 Ohm/Quadrat.

Die Wärmestrahlung reflektierende Beschichtung umfasst erfindungsgemäß zumindest eine Abdunklungsschicht. Die Beschichtung kann auch mehrere Abdunklungsschichten umfassen, beispielsweise zwei, drei oder vier Abdunklungsschichten, was auf optischen oder mechanischen Gründen gewünscht sein kann.

In einer vorteilhaften Ausgestaltung enthält die Beschichtung ein oder zwei erfindungsgemäße Abdunklungsschichten. Das ist besonders vorteilhaft im Hinblick auf eine einfache Herstellung der Beschichtung.

Die Abdunklungsschicht oder die mehreren Abdunklungsschichten können beispielsweise unterhalb der unteren dielektrischen Schicht, zwischen der unteren dielektrischen Schicht und der funktionellen Schicht, zwischen der funktionellen Schicht und der oberen dielektrischen Schicht und/oder oberhalb der oberen dielektrischen Schicht angeordnet sein.

Erfindungsgemäß ist die Abdunklungsschicht beziehungsweise sind die Abdunklungsschichten zwischen der unteren dielektrischen Schicht und der funktionellen Schicht und/oder zwischen der funktionellen Schicht und der oberen dielektrischen Schicht angeordnet. Bevorzugt stehen die Abdunklungsschichten dabei mit der funktionellen Schicht in direktem Kontakt. Es hat sich überraschend gezeigt, dass eine solche Wärmestrahlung reflektierende Beschichtung besonders dazu geeignet ist, eine Temperaturbehandlung, einen Biegeprozess und einen Vorspannprozess unbeschadet zu überstehen.

Die Abdunklungsschicht weist bevorzugt eine Dicke von 2 nm bis 50 nm, besonders bevorzugt von 5 nm bis 40 nm, ganz besonders bevorzugt von 10 nm bis 30 nm. Das ist besonders vorteilhaft im Hinblick auf die transmissionsmindernde Wirkung sowie auf die Korrosionsbeständigkeit und Biegbarkeit der Abdunklungsschicht.

Die Abdunklungsschicht enthält erfindungsgemäß zumindest ein Metall, ein Metallnitrid und/oder ein Metallcarbid. Der Begriff Metalle schließt dabei im Sinne der Erfindung auch Legierungen aus zwei oder mehreren Metallen ein. Ebenso sind Mischnitride und Mischcarbide zweier oder mehrerer Metalle eingeschlossen sowie Legierungen, Mischnitride oder Mischcarbide eines Metalls mit Silizium und/oder Aluminium.

Metalle und Metallcarbide können herstellungsbedingt geringe Mengen an Sauerstoff enthalten. Der Anteil an Sauerstoff ist dabei bevorzugt kleiner als 30 Gew.-%, besonders bevorzugt kleiner als 20 Gew.-%.

Das Metall, welches in der Abdunklungsschicht enthalten ist oder dessen Oxid oder Nitrid in der Abdunklungsschicht enthalten ist, ist bevorzugt aus den Übergangsmetallen, besonders bevorzugt aus den Gruppen IV B, V B und VI B des Periodensystems gewählt. Die Abdunklungsschicht enthält bevorzugt zumindest ein Metall, Metallnitrid oder Metallcarbid aus der Gruppe bestehend aus Hafnium, Niobium, Tantal, Molybdän, Wolfram, Titannitrid, Zirkoniumnitrid, Hafniumnitrid, Vanadiumnitrid, Niobiumnitrid, Tantalnitrid, Titancarbid, Zikoniumcarbid, Hafniumcarbid, Vanadiumcarbid, Niobiumcarbid, Tantalcarbid, Molybdäncarbid und Wolframcarbid, oder Gemische oder Legierungen davon. Die Schmelzpunkte T_{S} und die spezifischen elektrischen Widerstände ρ der angegebenen Materialien sind in Tabelle 1 zusammengefasst (vgl. auch H.O. Pierson: Handbook of Refractory Carbides and Nitrides. Westwood: Noyes Publications, 1996).

Der Schmelzpunkt des Metalls, des Metallnitrids und/oder des Metallcarbids beträgt bevorzugt größer als 2200 °C, besonders bevorzugt größer 2500 °C. Das ist besonders vorteilhaft im Hinblick auf die Korrosions- und Oxidationsbeständigkeit der Abdunklungsschicht.

Der spezifische elektrische Widerstand des Metalls, des Metallnitrids und/oder des Metallcarbids beträgt bevorzugt kleiner als 200 µOhm*cm. Das ist besonders vorteilhaft im Hinblick auf die transmissionsmindernde Wirkung der Abdunklungsschicht.

Die Abdunklungsschicht enthält bevorzugt zumindest ein Metall, Metallnitrid oder Metallcarbid aus der Gruppe bestehend aus Hafnium, Niobium, Tantal, Molybdän, Wolfram, Titannitrid, Zirkoniumnitrid, Hafniumnitrid, Niobiumnitrid, Tantalnitrid, Titancarbid, Zirkoniumcarbid, Hafniumcarbid, Vanadiumcarbid, Niobiumcarbid, Tantalcarbid, Molybdäncarbid und Wolframcarbid, oder Gemische oder Legierungen davon, oder Legierungen, Mischnitride oder Mischcarbide davon mit Silizium oder Aluminium. Das ist aufgrund des hohen Schmelzpunktes größer als 2200 °C besonders vorteilhaft für die Korrosionsbeständigkeit der Abdunklungsschicht.

Die Abdunklungsschicht enthält ganz besonders bevorzugt zumindest ein Metall, Metallnitrid oder Metallcarbid aus der Gruppe bestehend aus Tantal, Molybdän, Wolfram, Titannitrid, Zirkoniumnitrid, Hafniumnitrid, Tantalnitrid, Titancarbid, Zirkoniumcarbid, Hafniumcarbid, Vanadiumcarbid, Niobiumcarbid, Tantalcarbid, Molybdäncarbid und Wolframcarbid, oder Gemische oder Legierungen davon, oder Legierungen, Mischnitride oder Mischcarbide davon mit Silizium oder Aluminium. Das ist aufgrund des hohen Schmelzpunktes größer als 2500 °C ganz besonders vorteilhaft für die Korrosionsbeständigkeit der Abdunklungsschicht.

Prinzipiell sind Nitride und Carbide gegenüber Metallen oder Legierungen für die Abdunklungsschicht bevorzugt. Es hat sich gezeigt, dass solche Abdunklungsschichten besonders korrosions- und oxidationsbeständig und beschädigungsresistent sind.

Das Metallnitrid und das Metallcarbid kann bezüglich des Stickstoffs beziehungsweise bezüglich des Kohlenstoffs stöchiometrisch, unterstöchiometrisch oder überstöchimetrisch sein.

**Tabelle 1**

| Gruppe | | Tₛ /°C | ρ /µΩcm | | Tₛ /°C | ρ /µΩcm | | Tₛ /°C | ρ /µΩcm |
|---|---|---|---|---|---|---|---|---|---|
| IV B | | | | **TiN** | 2950 | 20 | **TiC** | 3067 | 68 |
| | | | | **ZrN** | 2980 | 14 | **ZrC** | 3420 | 43 |
| | **Hf** | 2230 | 35 | **HfN** | 3387 | 33 | **HfC** | 3928 | 37 |
| VB | | | | **VN** | 2177 | 85 | **VC** | 2830 | 60 |
| | **Nb** | 2468 | 13 | **NbN** | 2400 | 68 | **NbC** | 3600 | 35 |
| | **Ta** | 2996 | 12 | **TaN** | 3093 | 193 | **TaC** | 3950 | 25 |
| VI B | | | | | | | | | |
| | **Mo** | 2620 | 5,6 | | | | **Mo**₂**C** | 2520 | 71 |
| | **W** | 3410 | 5,3 | | | | **WC** | 3410 | 22 |

Die funktionelle Schicht weist reflektierende Eigenschaften gegenüber Wärmestrahlung, insbesondere Infrarotstrahlung auf, ist im sichtbaren Spektralbereich jedoch weitgehend transparent. Die funktionelle Schicht enthält erfindungsgemäß zumindest ein transparentes, elektrisch leitfähiges Oxid (*transparent conductive oxide*, TCO). Der Brechungsindex des Materials der funktionellen Schicht beträgt bevorzugt von 1,7 bis 2,3. Die funktionelle Schicht enthält bevorzugt zumindest Indium-Zinn-Oxid (ITO). Damit werden besonders gute Ergebnisse hinsichtlich der Emissivität und der Biegbarkeit der erfindungsgemäßen Beschichtung erreicht.

Eine funktionelle Schicht auf der Basis von TCO, insbesondere ITO, ist nicht korrosionsanfällig und daher besonders zur Anwendung auf der innenraumseitigen Oberfläche der Scheibe geeignet.

Das Indium-Zinn-Oxid wird bevorzugt mittels magnetfeldunterstützter Kathodenzerstäubung mit einem Target aus Indium-Zinn-Oxid abgeschieden. Das Target enthält bevorzugt von 75 Gew. % bis 95 Gew. % Indiumoxid und von 5 Gew. % bis 25 Gew. % Zinnoxid sowie herstellungsbedingte Beimengungen. Die Abscheidung des Indium-Zinn-Oxids erfolgt bevorzugt unter einer Schutzgasatmosphäre, beispielsweise Argon. Dem Schutzgas kann auch ein geringer Anteil an Sauerstoff zugesetzt werden, beispielsweise um die Homogenität der funktionellen Schicht zu verbessern.

Das Target kann alternativ bevorzugt zumindest von 75 Gew. % bis 95 Gew. % Indium und von 5 Gew. % bis 25 Gew. % Zinn enthalten. Die Abscheidung des Indium-Zinn-Oxids erfolgt dann bevorzugt unter Zugabe von Sauerstoff als Reaktionsgas während der Kathodenzerstäubung.

Die Emissivität der erfindungsgemäßen Scheibe kann durch die Dicke der funktionellen Schicht beeinflusst werden. Die Dicke der funktionellen Schicht beträgt bevorzugt von 40 nm bis 200 nm, besonders bevorzugt von 90 nm bis 150 nm und ganz besonders bevorzugt von 100 nm bis 140 nm, beispielsweise etwa 120 nm. In diesem Bereich für die Dicke der funktionellen Schicht werden besonders vorteilhafte Werte für die Emissivität und eine besonders vorteilhafte Fähigkeit der funktionellen Schicht, eine mechanische Transformation wie Biegen oder Vorspannen ohne Beschädigung zu überstehen, erreicht.

Die funktionelle Schicht kann aber auch andere transparente, elektrisch leitfähige Oxide enthalten, beispielsweise Fluor-dotiertes Zinnoxid (SnO₂:F), Antimon-dotiertes Zinnoxid (SnO₂:Sb), Indium-Zink-Mischoxid (IZO), Gallium-dotiertes oder Aluminium-dotiertes Zinkoxid, Niobium-dotiertes Titanoxid, Cadmiumstannat und / oder Zinkstannat.

Die Wärmestrahlung reflektierende Beschichtung ist ein Schichtstapel, welcher erfindungsgemäß mindestens zwei dielektrische Schichten umfasst, nämlich eine untere dielektrische Schicht und eine obere dielektrische Schicht. Die untere dielektrische Schicht ist unterhalb der funktionellen Schicht angeordnet, die obere dielektrische Schicht ist oberhalb der funktionellen Schicht angeordnet. Die erfindungsgemäße Beschichtung kann aber auch eine oder mehrere weitere dielektrische Schichten umfassen, welche unterhalb und/oder oberhalb der funktionellen Schicht angeordnet sein können.

Die dielektrischen Schichten können beispielsweise Siliziumoxid (SiO₂), Siliziumnitrid (Si₃N₄), Zinkoxid (ZnO), Zinnoxid (SnO₂), Zinn-Zink-Mischoxid (SnZnOₓ) Zirkoniumoxid (ZrO₂), Hafniumoxid (HfO₂), Tantaloxid (Ta₂O₅), Wolframoxid (WO₃), Nioboxid (Nb₂O₅) oder Titanoxid (TiO₂) enthalten und beispielsweise Dicken von 5 nm bis 200 nm aufweisen.

Die Abdunklungsschicht oder die Abdunklungsschichten können prinzipiell an jeder beliebigen Position des Schichtstapels angeordnet sein. Die Abdunklungsschicht kann beispielsweise zwischen der funktionellen Schicht und der benachbarten dielektrischen Schicht oberhalb und/oder unterhalb der funktionellen Schicht angeordnet sein. Die Abdunklungsschicht kann beispielsweise unterhalb der untersten dielektrischen Schicht angeordnet sein. Die Abdunklungsschicht kann beispielsweise oberhalb der obersten dielektrischen Schicht angeordnet sein. Die Abdunklungsschicht kann auch zwischen zwei benachbarten dielektrischen Schichten angeordnet sein.

In einer bevorzugten Ausgestaltung der Erfindung ist die untere dielektrische Schicht eine Haftschicht. Die Haftschicht führt zu einer dauerhaft stabilen Haftung der oberhalb der Haftschicht abgeschiedenen Schichten auf dem Substrat. Die Haftschicht verhindert weiter die Anreicherung von aus dem Substrat diffundierenden Ionen im Grenzbereich zur funktionellen Schicht, insbesondere von Natriumionen, falls das Substrat aus Glas besteht. Solche Ionen können zur Korrosion und zu einer geringen Haftung der funktionellen Schicht führen. Die Haftschicht ist daher besonders vorteilhaft im Hinblick auf die Stabilität der funktionellen Schicht.

Die Haftschicht enthält bevorzugt zumindest ein Oxid oder ein Nitrid. Die Haftschicht enthält besonders bevorzugt Siliziumoxid (SiO₂) oder Siliziumnitrid (Si₃N₄). Das ist besonders vorteilhaft im Hinblick auf die Haftung der oberhalb der Haftungsschicht abgeschiedenen Schichten auf dem Substrat. Das Siliziumoxid kann Dotierungen aufweisen, beispielsweise Fluor, Kohlenstoff, Stickstoff, Bor, Phosphor und / oder Aluminium. Das Siliziumoxid oder Siliziumnitrid ist ganz besonders bevorzugt mit Aluminium dotiert (SiO₂:Al, Si₃N₄:Al), mit Bor dotiert (SiO₂:B, Si₃N₄:B) oder mit Zirkonium dotiert (SiO₂:Zr, Si₃N₄:Zr). Das ist besonders vorteilhaft im Hinblick auf die optischen Eigenschaften der Beschichtung sowie die Geschwindigkeit des Aufbringens der Haftschicht beispielsweise durch Kathodenzerstäubung.

Das Siliziumoxid beziehungsweise das Siliziumnitrid wird bevorzugt mittels magnetfeldunterstützter Kathodenzerstäubung mit einem Target abgeschieden, welches zumindest Silizium enthält. Das Target zur Abscheidung einer Haftschicht enthaltend Aluminium-dotiertes Siliziumoxid beziehungsweise Siliziumnitrid enthält bevorzugt von 80 Gew. % bis 95 Gew. % Silizium und von 5 Gew. % bis 20 Gew. % Aluminium sowie herstellungsbedingte Beimengungen. Das Target zur Abscheidung einer Haftschicht enthaltend Bor-dotiertes Siliziumoxid beziehungsweise Siliziumnitrid enthält bevorzugt von 99,9990 Gew. % bis 99,9999 Gew. % Silizium und von 0,0001 Gew. % bis 0,001 Gew. % Bor sowie herstellungsbedingte Beimengungen. Das Target zur Abscheidung einer Haftschicht enthaltend Zirkonium-dotiertes Siliziumoxid beziehungsweise Siliziumnitrid enthält bevorzugt von 60 Gew. % bis 90 Gew. % Silizium und von 10 Gew. % bis 40 Gew. % Zirkonium sowie herstellungsbedingte Beimengungen. Die Abscheidung erfolgt bevorzugt im Falle des Siliziumoxids unter Zugabe von Sauerstoff als Reaktionsgas, im Falle des Siliziumnitrids unter Zugabe von Stickstoff als Reaktionsgas während der Kathodenzerstäubung.

Die Dotierung der Haftschicht kann auch die Glätte der oberhalb der Haftschicht aufgebrachten Schichten verbessern. Eine hohe Glätte der Schichten ist besonders günstig bei Verwendung der erfindungsgemäßen Scheibe im Kraftfahrzeugbereich, da hierdurch eine unangenehme raue Haptik der Scheiben vermieden wird. Ist die erfindungsgemäße Scheibe eine Seitenscheibe, so kann sie mit geringer Reibung zu den Dichtlippen bewegt werden.

Die Haftschicht kann aber auch andere Materialen enthalten, beispielsweise andere Oxide wie TiO₂, Al₂O₃, Ta₂O₅, Y₂O₃, ZrO₂, HfO₂, WO₃, Nb₂O₅ ZnO, SnO₂, und / oder ZnSnOₓ oder Nitride wie AIN.

Die Haftschicht weist bevorzugt eine Dicke von 10 nm bis 150 nm auf, besonders bevorzugt von 15 nm bis 50 nm, beispielsweise etwa 30 nm. Das ist besonders vorteilhaft im Hinblick auf die Haftung der erfindungsgemäßen Beschichtung und die Vermeidung der Diffusion von Ionen vom Substrat in die funktionelle Schicht.

In einer bevorzugten Ausgestaltung der Erfindung ist die obere dielektrische Schicht eine Barriereschicht zur Regulierung von Sauerstoffdiffusion während einer Temperaturbehandlung der Scheibe. Durch die Barriereschicht kann somit der Sauerstoffgehalt der funktionellen Schicht beeinflusst und eingestellt werden, welcher einen deutlichen Einfluss auf die Eigenschaften der funktionellen Schicht hat. Ein zu geringer ebenso wie ein zu hoher Sauerstoffgehalt führen zu einem zu hohen Flächenwiderstand und damit einer zu hohen Emissivität. Ein zu geringer Sauerstoffgehalt führt zudem zu einem deutlichen, oft unerwünschten Farbeindruck. Ein zu hoher Sauerstoffgehalt der funktionellen Schicht führt dazu, dass die funktionelle Schicht beim Biegen beschädigt wird, was sich insbesondere als Risse innerhalb der funktionellen Schicht zeigt.

Die Dicke der Barriereschicht beträgt bevorzugt von 5 nm bis 50 nm, besonders bevorzugt von 7 nm bis 40 nm, ganz besonders bevorzugt von 10 nm bis 30 nm. Damit werden besonders gute Ergebnisse im Hinblick auf den Flächenwiderstand und die Biegbarkeit erreicht. Zudem wird die Beschichtung durch eine Barriereschicht mit diesen Dicken vorteilhaft vor Korrosion durch eine feuchte Atmosphäre geschützt.

Der Brechungsindex des Materials der Barriereschicht beträgt bevorzugt größer oder gleich dem Brechungsindex des Materials der funktionellen Schicht. Der Brechungsindex des Materials der Barriereschicht beträgt besonders bevorzugt von 1,7 bis 2,3. Dadurch werden vorteilhafte optische Eigenschaften der Beschichtung erreicht, insbesondere ein ästhetischer Farbeindruck bei Reflexion von Licht.

Die Barriereschicht enthält bevorzugt zumindest ein Oxid und / oder ein Nitrid. Das Oxid und / oder Nitrid kann stöchiometrisch oder nicht-stöchiometrisch zusammengesetzt sein. Die Barriereschicht enthält besonders bevorzugt zumindest Siliziumnitrid (Si₃N₄). Das ist besonders vorteilhaft im Hinblick auf den Einfluss der Barrriereschicht auf die Oxidation der funktionellen Schicht und auf die optischen Eigenschaften der Scheibe. Das Siliziumnitrid kann Dotierungen aufweisen, beispielsweise Titan, Zirkonium, Bor, Hafnium und / oder Aluminium. Das Siliziumnitrid ist ganz besonders bevorzugt mit Aluminium dotiert (Si₃N₄:Al) oder mit Zirkonium dotiert (Si₃N₄:Zr) oder mit Bor dotiert (Si₃N₄:B). Das ist besonders vorteilhaft im Hinblick auf die optischen Eigenschaften, die Biegbarkeit, die Glätte und die Emissivität der Beschichtung sowie die Geschwindigkeit des Aufbringens der Barriereschicht beispielsweise durch Kathodenzerstäubung.

Das Siliziumnitrid wird bevorzugt mittels magnetfeldunterstützter Kathodenzerstäubung abgeschieden mit einem Target, das zumindest Silizium enthält. Das Target zur Abscheidung einer Barriereschicht enthaltend Aluminium-dotiertes Siliziumnitrid enthält bevorzugt von 80 Gew. % bis 95 Gew. % Silizium und von 5 Gew. % bis 20 Gew. % Aluminium sowie herstellungsbedingte Beimengungen. Das Target zur Abscheidung einer Barriereschicht enthaltend Bor-dotiertes Siliziumnitrid enthält bevorzugt von 99,9990 Gew. % bis 99,9999 Gew. % Silizium und von 0,0001 Gew. % bis 0,001 Gew. % Bor sowie herstellungsbedingte Beimengungen. Das Target zur Abscheidung einer Barriereschicht enthaltend Zirkonium-dotiertes Siliziumnitrid enthält bevorzugt von 60 Gew. % bis 90 Gew. % Silizium und von 10 Gew. % bis 40 Gew. % Zirkonium sowie herstellungsbedingte Beimengungen. Die Abscheidung des Siliziumnitrids erfolgt bevorzugt unter Zugabe von Stickstoff als Reaktionsgas während der Kathodenzerstäubung.

Bei einer Temperaturbehandlung nach dem Aufbringen der erfindungsgemäßen Beschichtung kann das Siliziumnitrid teilweise oxidiert werden. Eine als Si₃N₄ abgeschiedene Barrriereschicht enthält dann nach der Temperaturbehandlung SiₓN_{y}O_{z}, wobei der Sauerstoffgehalt typischerweise von 0 Atom-% bis 35 Atom-% beträgt.

Die Barriereschicht kann alternativ aber auch beispielsweise zumindest WO₃, Nb₂O₅, Bi₂O₃, TiO₂, und / oder AIN enthalten.

In einer bevorzugten Ausgestaltung der Erfindung ist oberhalb der oberen dielektrischen Schicht eine dielektrische Antireflexionsschicht angeordnet. Die Antireflexionsschicht vermindert Reflexionen im sichtbaren Spektralbereich an der erfindungsgemäßen Scheibe und bewirkt einen neutraleren Farbeindruck von reflektiertem und transmittiertem Licht. Die Antireflexionsschicht verbessert zudem die Korrosionsbeständigkeit der funktionellen Schicht. Das Material der Antireflexionsschicht weist bevorzugt einen Brechungsindex auf, der kleiner als der Brechungsindex des Materials der funktionellen Schicht ist. Der Brechungsindex des Materials der Antireflexionsschicht beträgt bevorzugt kleiner oder gleich 1,8.

Die Antireflexionsschicht enthält bevorzugt zumindest ein Oxid. Die Antireflexionsschicht enthält besonders bevorzugt Siliziumdioxid (SiO₂). Das ist besonders vorteilhaft im Hinblick auf die optischen Eigenschaften der Scheibe und die Korrosionsbeständigkeit der funktionellen Schicht. Das Siliziumdioxid kann Dotierungen aufweisen, beispielsweise Fluor, Kohlenstoff, Stickstoff, Bor, Phosphor und / oder Aluminium. Das Siliziumoxid ist ganz besonders bevorzugt mit Aluminium dotiert (SiO₂:Al), mit Bor dotiert (SiO₂:B) oder mit Zirkonium dotiert (SiO₂:Zr).

Die Antireflexionsschicht kann aber auch andere Materialen enthalten, beispielsweise andere Oxide wie Al₂O₃.

Die Antireflexionsschicht weist bevorzugt eine Dicke von 20 nm bis 150 nm auf, besonders bevorzugt von 40 nm bis 100 nm. Das ist besonders vorteilhaft im Hinblick auf eine geringe Reflexion und eine hohe Transmission von sichtbarem Licht sowie die Einstellung eines gezielten Farbeindrucks der Scheibe und die Korrosionsbeständigkeit der funktionellen Schicht.

In einer besonders vorteilhaften Ausgestaltung umfasst die Wärmestrahlung reflektierende Beschichtung auf dem Substrat zumindest
- eine Haftschicht als untere dielektrische Schicht,
- oberhalb der Haftschicht eine funktionelle Schicht,
- oberhalb der funktionellen Schicht eine Barriereschicht zur Regulierung der Sauerstoffdiffusion als obere dielektrische Schicht und
- oberhalb der Barriereschicht eine Antireflexionsschicht.

Die Abdunklungsschicht oder die mehreren Abdunklungsschichten sind bevorzugt unterhalb der Haftschicht (also zwischen Substrat und Haftschicht), zwischen Haftschicht und funktioneller Schicht, zwischen funktioneller Schicht und Barriereschicht und/oder zwischen Barriereschicht und Antireflexionsschicht angeordnet.

Oberhalb der oberen dielektrischen Schicht (und gegebenenfalls oberhalb der Antireflexionsschicht) kann eine Abdeckschicht angeordnet. Die Abdeckschicht ist bevorzugt die oberste Schicht der erfindungsgemäßen Beschichtung. Die Abdeckschicht schützt die erfindungsgemäße Beschichtung vor Beschädigungen, insbesondere vor Verkratzen. Die Abdeckschicht enthält bevorzugt zumindest ein Oxid, besonders bevorzugt zumindest Titanoxid (TiO₂), Zirkoniumoxid (ZrO₂), Hafniumoxid (HfO₂), Nioboxid (Nb₂O₅) Tantaloxid (Ta₂O₅), Chromoxid (Cr₂O₃), Wolframoxid (WO₃) und/oder Ceroxid (CeO₂). Die Dicke der Abdeckschicht beträgt bevorzugt von 2 nm bis 50 nm, besonders bevorzugt von 5 nm bis 20 nm. Damit werden besonders gute Ergebnisse hinsichtlich der Kratzfestigkeit erzielt. Die Abdunklungsschicht kann dabei auch zwischen der oberen dielektrischen Schicht und der Abdeckschicht beziehungsweise zwischen der Antireflexionsschicht und der Abdeckschicht angeordnet sein.

Unterhalb der unteren dielektrischen Schicht kann auch eine zusätzliche dielektrische haftvermittelnde Schicht angeordnet sein, bevorzugt mit einer Dicke von 2 nm bis 15 nm. Beispielsweise kann die Haftschicht SiO₂ enthalten und die zusätzliche haftvermittelnde Schicht kann zumindest ein Oxid wie TiO₂, Al₂O₃, Ta₂O₅, Y₂O₃, ZnO und / oder ZnSnOₓ, oder ein Nitrid wie Si₃N₄ oder AIN enthalten. Durch die haftvermittelnde Schicht wird die Haftung der erfindungsgemäßen Beschichtung vorteilhaft weiter verbessert. Außerdem ermöglicht die haftvermittelnde Schicht eine verbesserte Anpassung der Farbwerte und der Transmission bzw. Reflexion.

Das Substrat enthält bevorzugt Glas, besonders bevorzugt Flachglas, Floatglas, Quarzglas, Borosilikatglas, Kalk-Natron-Glas oder Kunststoffe, vorzugsweise starre Kunststoffe, insbesondere Polyethylen, Polypropylen, Polycarbonat, Polymethylmethacrylat, Polystyrol, Polyamid, Polyester, Polyvinylchlorid und / oder Gemische davon.

Das Substrat ist in einer vorteilhaften Ausgestaltung der Erfindung getönt und/oder gefärbt. Durch die Kombination eines getönten oder gefärbten Substrats mit der erfindungsgemäßen Beschichtung können insbesondere verbesserte Wärmestrahlung reflektierende Scheiben mit verminderter Transmission im sichtbaren Spektralbereich realisiert werden. Solche Scheiben sind beispielsweise im Fahrzeugbereich als Seitenscheiben, Heckscheiben oder Dachscheiben einsetzbar und können aus ästhetischen oder thermischen Gründen gewünscht sein. Gegenüber klaren Substraten mit transmissionsmindernden Wärmestrahlung reflektierenden Beschichtungen (beispielsweise basierend auf Chrom) fallen eventuell vorhandene Schichtdefekte bei erfindungsgemäßen Scheiben weniger störend auf. Zudem wird die Transmission durch ein getöntes Substrat durch die erfindungsgemäße Beschichtung weitere reduziert, so dass Scheiben mit sehr geringer Lichttransmission realisiert werden können. Das Substrat weist bevorzugt eine Transmission im sichtbaren Spektralbereich von kleiner als 40 % auf, besonders bevorzugt kleiner als 20% und ganz besonders bevorzugt kleiner als 15%, beispielsweise etwa 10%. Das Substrat kann prinzipiell aber auch eine höhere Transmission aufweisen, beispielsweise größer oder gleich 70 %. Hierbei kann durch die erfindungsgemäße Beschichtung eine leichte Tönung erzielt werden.

In einer besonders vorteilhaften Ausgestaltung weist das Substrat eine Transmission im sichtbaren Spektralbereich von kleiner als 15 % auf und die Scheibe mit Wärmestrahlung reflektierender Beschichtung eine Transmission von kleiner als 10 %. In einer ganz besonders vorteilhaften Ausgestaltung weist das Substrat eine Transmission im sichtbaren Spektralbereich von kleiner als 10 % auf und die Scheibe mit Wärmestrahlung reflektierender Beschichtung eine Transmission von kleiner als 7 %, insbesondere kleiner als 6 %. So können besonders dunkle Scheiben realisiert werden.

Die Dicke des Substrats kann breit variieren und so hervorragend den Erfordernissen im Einzelfall angepasst werden. Vorzugsweise werden Scheiben mit den Standardstärken von 1,0 mm bis 25 mm und bevorzugt von 1,4 mm bis 4,9 mm verwendet. Die Größe des Substrats kann breit variieren und richtet sich nach der erfindungsgemäßen Verwendung. Das Substrat weist beispielsweise im Fahrzeugbau und Architekturbereich übliche Flächen von 200 cm² bis zu 20 m² auf.

Das Substrat kann plan sein oder auch leicht oder stark in einer oder in mehreren Richtungen des Raumes gebogen sein. Plane Scheiben treten beispielsweise bei Verglasungen im Architekturbereich oder bei großflächigen Verglasungen von Bussen, Zügen oder Traktoren auf. Gebogene Scheiben treten beispielsweise bei Verglasungen im Kraftfahrzeugbereich auf, wobei typische Krümmungsradien im Bereich von etwa 10 cm bis etwa 40 m liegen. Der Krümmungsradius muss nicht über die gesamte Scheibe konstant sein, es können in einer Scheibe stärker und weniger stark gebogene Bereiche vorliegen. Es ist ein besonderer Vorteil der Erfindung, dass ein planes Substrat mit der erfindungsgemäßen Beschichtung versehen werden kann und dass die Beschichtung bei einem nachgelagerten Biegeprozess, der typischerweise bei erhöhten Temperaturen von beispielsweise 500°C bis 700°C ausgeführt wird, nicht beschädigt wird. Prinzipiell kann die Beschichtung natürlich auch auf ein gebogenes Substrat ausgebracht werden. Die dreidimensionale Form des Substrats hat dabei vorzugsweise keine Schattenzonen, so dass das Substrat beispielsweise durch Kathodenzerstäubung beschichtet werden kann.

Die erfindungsgemäße Beschichtung kann ganzflächig auf die Oberfläche des Substrates aufgebracht sein. Die Oberfläche des Substrats kann aber auch beschichtungsfreie Bereiche aufweisen. Die Oberfläche des Substrats kann beispielsweise einen umlaufenden beschichtungsfreien Randbereich und/oder einen beschichtungsfreien Bereich, welcher als Datenübertragungsfenster oder Kommunikationsfenster dient, aufweisen.

Das Substrat kann auch auf beiden Oberflächen mit jeweils einer erfindungsgemäßen Wärmestrahlung reflektierenden Beschichtung versehen sein.

In einer vorteilhaften Ausgestaltung der Erfindung ist das Substrat über zumindest eine thermoplastische Zwischenschicht mit einer Deckscheibe zu einer Verbundscheibe verbunden. Die Deckscheibe ist bevorzugt dafür vorgesehen, in Einbaulage der Verbundscheibe der äußeren Umgebung zugewandt zu sein, während das Substrat dem Innenraum zugewandt ist. Die erfindungsgemäße Beschichtung ist bevorzugt auf der von der Deckscheibe abgewandten Oberfläche des Substrats angeordnet.

Die Deckscheibe enthält bevorzugt Glas, besonders bevorzugt Flachglas, Floatglas, Quarzglas, Borosilikatglas, Kalk-Natron-Glas oder Kunststoffe, vorzugsweise starre Kunststoffe, insbesondere Polyethylen, Polypropylen, Polycarbonat, Polymethylmethacrylat, Polystyrol, Polyamid, Polyester, Polyvinylchlorid und / oder Gemische davon. Die Deckscheibe weist bevorzugt eine Dicke von 1,0 mm bis 25 mm und besonders bevorzugt von 1,4 mm bis 4,9 mm auf.

Die thermoplastische Zwischenschicht enthält bevorzugt thermoplastische Kunststoffe, beispielsweise Polyvinylbutyral (PVB), Ethylenvinylacetat (EVA), Polyurethan (PU), Polyethylenterephthalat (PET) oder mehrere Schichten davon, bevorzugt mit Dicken von 0,3 mm bis 0,9 mm.

Die Verbundscheibe weist in einer vorteilhaften Ausgestaltung eine Transmission im sichtbaren Spektralbereich von kleiner als 25 %, bevorzugt kleiner als 15 %, besonders bevorzugt kleiner als 10 %, ganz besonders bevorzugt kleiner als 8 % und insbesondere kleiner als 6 % auf. Das Substrat, die Deckscheibe und/oder die thermoplastische Zwischenschicht sind dabei bevorzugt getönt und/oder gefärbt. Die Deckscheibe weist bevorzugt eine Transmission im sichtbaren Spektralbereich von kleiner 40% auf, die thermoplastische Zwischenschicht weist bevorzugt eine Transmission von 20 % bis 70% auf.

In einer besonders vorteilhaften Ausgestaltung ist die erfindungsgemäße Beschichtung auf der dem Innenraum zugewandten Oberfläche des Substrats aufgebracht, wobei das Substrat die dem Innenraum zugewandte Scheibe einer Verbundscheibe darstellt. Auf der der Deckscheibe zugewandten Oberfläche des Substrats, auf der dem Substrat zugewandten Oberfläche der Deckscheibe oder auf einer Trägerfolie in der thermoplastischen Zwischenschicht ist weiter eine Sonnenschutzbeschichtung aufgebracht. Die Sonnenschutzbeschichtung ist dort vorteilhaft vor Korrosion und mechanischer Beschädigung geschützt. Die Sonnenschutzbeschichtung umfasst bevorzugt zumindest eine metallische Schicht auf Basis von Silber oder einer silberhaltigen Legierung mit einer Dicke von 5 nm bis 25 nm. Besonders gute Ergebnisse werden mit zwei oder drei funktionellen Schichten erzielt, die durch dielektrische Schichten mit Dicken von 10 nm bis 100 nm voneinander getrennt sind. Die Sonnenschutzbeschichtung reflektiert Anteile der einfallenden Sonnenstrahlung außerhalb des sichtbaren Spektralbereichs, insbesondere im infraroten Spektralbereich. Durch die Sonnenschutzbeschichtung wird die Aufheizung des Innenraums durch direkte Sonneneinstrahlung verringert. Zudem verringert die Sonnenschutzbeschichtung die Erwärmung der in Einfallsrichtung der Sonnenstrahlung hinter der Sonnenschutzbeschichtung angeordneten Elemente der Verbundscheibe und damit die von der Verbundscheibe ausgesandte Wärmestrahlung. Durch die Kombination der Sonnenschutzbeschichtung mit der erfindungsgemäßen Beschichtung zur Reflexion von Wärmestrahlung wird der thermische Komfort im Innenraum vorteilhaft weiter verbessert.

Das Substrat kann beispielsweise auch mit einer weiteren Scheibe über Abstandshalter zu einer Isolierverglasung verbunden sein. Das Substrat kann auch mit mehr als einer weiteren Scheibe über thermoplastische Zwischenschichten und / oder Abstandshalter verbunden sein.

Die Erfindung umfasst weiter ein Verfahren zur Herstellung einer Scheibe mit Wärmestrahlung reflektierender Beschichtung, wobei auf ein Substrat nacheinander zumindest
(a) eine untere dielektrische Schicht,
(b) eine funktionelle Schicht, die zumindest ein transparentes, elektrisch leitfähiges Oxid (TCO) enthält, und
(c) eine obere dielektrische Schicht
aufgebracht werden und wobei außerdem zwischen Verfahrensschritt (a) und (b) und/oder zwischen Verfahrensschritt (b) und (c) mindestens eine Abdunklungsschicht aufgebracht wird, die zumindest ein Metall, ein Metallnitrid und/oder ein Metallcarbid mit einem Schmelzpunkt von größer als 1900 °C und einem spezifischen elektrischen Widerstand von kleiner als 500 µOhm*cm enthält.

Bevorzugt wird nach der oberen dielektrischen Schicht eine Antireflexionsschicht aufgebracht. Nach der oberen dielektrischen Schicht und gegebenenfalls der Antireflexionsschicht kann eine Abdeckschicht aufgebracht werden.

Prinzipiell kann vor und/oder nach jeder Schicht eine Abdunklungsschicht aufgebracht werden. Es können eine oder auch mehrere Abdunklungsschichten aufgebracht werden.

Die einzelnen Schichten werden durch an sich bekannte Verfahren abgeschieden, bevorzugt durch magnetfeldunterstützte Kathodenzerstäubung. Das ist besonders vorteilhaft im Hinblick auf eine einfache, schnelle, kostengünstige und gleichmäßige Beschichtung des Substrats. Die Kathodenzerstäubung erfolgt in einer Schutzgasatmosphäre, beispielsweise aus Argon, beziehungsweise in einer Reaktivgasatmosphäre, beispielsweise durch Zugabe von Sauerstoff, einem Kohlenwasserstoff (beispielsweise Methan) oder Stickstoff.

Die einzelnen Schichten können aber auch durch andere, dem Fachmann bekannte Verfahren aufgebracht werden, beispielsweise durch Aufdampfen oder chemische Gasphasenabscheidung (chemical vapour deposition, CVD), durch Atomlagenabscheidung (atomic layer deposition, ALD), durch plasmagestützte Gasphasenabscheidung (PECVD) oder durch nasschemische Verfahren.

Die Scheibe wird bevorzugt nach dem Aufbringen der Wärmestrahlung reflektierenden Beschichtung einer Temperaturbehandlung unterzogen. Dabei wird das Substrat mit der erfindungsgemäßen Beschichtung auf eine Temperatur von mindestens 200°C, besonders bevorzugt mindestens 300°C erhitzt. Durch die Temperaturbehandlung wird insbesondere die Kristallinität der funktionellen Schicht verbessert. Dadurch werden insbesondere die reflektierenden Eigenschaften gegenüber Wärmestrahlung sowie die optischen Eigenschaften der Scheibe deutlich verbessert. Die erfindungsgemäße Abdunklungsschicht wird während der Temperaturbehandlung nicht beschädigt. Insbesondere wird die Abdunklungsschicht während der Temperaturbehandlung nicht in einem Maße oxidiert, das zu einer Erhöhung der Lichttransmission führt.

In einer vorteilhaften Ausführung des erfindungsgemäßen Verfahrens erfolgt die Temperaturbehandlung im Rahmen eines Biegeprozesses. Dabei wird das Substrat mit der erfindungsgemäßen Beschichtung im erhitzten Zustand in eine oder mehrere Richtungen des Raumes gebogen. Die Temperatur, auf die das Substrat erhitzt wird, beträgt bevorzugt von 500°C bis 700°C. Es ist ein besonderer Vorteil der erfindungsgemäßen Beschichtung zur Reflexion von Wärmestrahlung, dass sie einem solchen Biegeprozess unterzogen werden kann, ohne dabei beschädigt zu werden. Die erfindungsgemäße Abdunklungsschicht wird während des Biegeprozesses nicht beschädigt, beispielsweise durch Risse

Natürlich können zeitlich vor oder nach dem Biegeprozess weitere Temperaturbehandlungsschritte erfolgen. Eine Temperaturbehandlung kann alternativ auch mittels Laserstrahlung durchgeführt werden.

Das Substrat kann in einer vorteilhaften Ausführung nach der Temperaturbehandlung und gegebenenfalls nach dem Biegen mit einer Vorspannung oder Teilvorspannung versehen werden. Dazu wird das Substrat in an sich bekannter Weise geeignet abgekühlt. Ein vorgespanntes Substrat weist typischerweise Oberflächendruckspannungen von mindestens 69 MPa auf. Ein teilvorgespanntes Substrat weist typischerweise Oberflächendruckspannungen von 24 MPa bis 52 MPa auf. Ein vorgespanntes Substrat eignet sich als Einscheibensicherheitsglas beispielsweise als Seitenscheibe oder Heckscheibe eines Kraftfahrzeugs.

In einer vorteilhaften Ausführung der Erfindung wird das Substrat nach der Temperaturbehandlung und gegebenenfalls nach dem Biegeprozess und / oder dem Vorspannprozess über zumindest eine thermoplastische Zwischenschicht mit einer Deckscheibe zu einer Verbundscheibe verbunden. Das Substrat wird dabei bevorzugt so in dem Verbund angeordnet, dass die mit der erfindungsgemäßen Beschichtung versehene Oberfläche von der thermoplastischen Zwischenschicht und der Deckscheibe abgewandt ist.

Die Erfindung umfasst weiter die Verwendung der erfindungsgemäßen Scheibe mit Wärmestrahlung reflektierender Beschichtung als Scheibe oder als Bestandteil einer Scheibe, insbesondere als Bestandteil einer Isolierverglasung oder einer Verbundscheibe, in Gebäuden, insbesondere im Zugangs- oder Fensterbereich, als Brandschutztür, als Einbauteil in Möbeln und Geräten, insbesondere elektronischen Geräten mit Kühl- oder Heizfunktion, beispielsweise als Ofentür oder Kühlschranktür, oder in Fortbewegungsmitteln für den Verkehr auf dem Lande, in der Luft oder zu Wasser, insbesondere in Zügen, Schiffen und Kraftfahrzeugen beispielsweise als Heckscheibe, Seitenscheibe und / oder Dachscheibe.

Im Folgenden wird die Erfindung anhand einer Zeichnung und Ausführungsbeispielen näher erläutert. Die Zeichnung ist eine schematische Darstellung und nicht maßstabsgetreu. Die Zeichnung schränkt die Erfindung in keiner Weise ein.

Es zeigen:
- Fig. 1: einen Querschnitt durch eine Ausgestaltung der erfindungsgemäßen Scheibe mit Wärmestrahlung reflektierender Beschichtung,
- Fig. 2: einen Querschnitt durch eine weitere Ausgestaltung der erfindungsgemäßen Scheibe mit Wärmestrahlung reflektierender Beschichtung,
- Fig. 3: einen Querschnitt durch eine weitere Ausgestaltung der erfindungsgemäßen Scheibe mit Wärmestrahlung reflektierender Beschichtung,
- Fig. 4: einen Querschnitt durch eine weitere Ausgestaltung der erfindungsgemäßen Scheibe mit Wärmestrahlung reflektierender Beschichtung,
- Fig. 5: einen Querschnitt durch eine Verbundscheibe umfassend eine erfindungsgemäße Scheibe,
- Fig. 6: ein detailliertes Flussdiagramm einer Ausführungsform des erfindungsgemäßen Verfahrens.

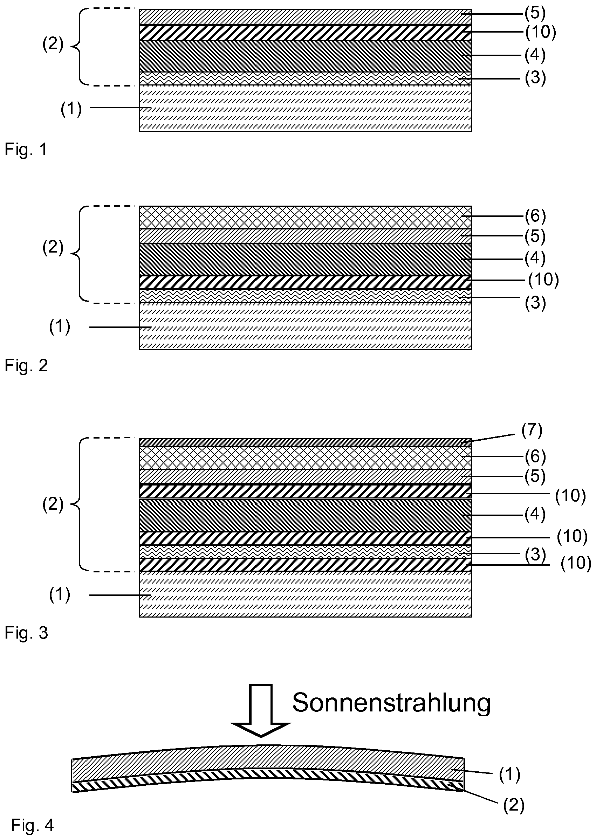

Fig. 1 zeigt einen Querschnitt durch eine Ausgestaltung der erfindungsgemäßen Scheibe mit dem Substrat 1 und der Wärmestrahlung reflektierenden Beschichtung 2 (auch Low-E-Beschichtung genannt). Das Substrat 1 enthält Kalk-Natron-Glas und weist eine Dicke von 2,9 mm auf. Die Beschichtung 2 umfasst eine untere dielektrische Schicht 3, eine funktionelle Schicht 4, eine Abdunklungsschicht 10 und eine obere funktionelle Schicht 5. Die Schichten sind in der angegebenen Reihenfolge mit wachsendem Abstand zum Substrat 1 angeordnet.

Die funktionelle Schicht 4 besteht aus Indium-Zinnoxid (ITO) und weist eine Dicke von etwa 100 nm auf. Die untere dielektrische Schicht 3 und die obere dielektrische Schicht 5 können auf dem Fachmann an sich bekannte Weise ausgebildet sein und beispielsweise aus Siliziumoxid (SiO₂) oder Siliziumnitrid (Si₃N₄) bestehen und eine Dicke von etwa 100 nm aufweisen.

Die Abdunklungsschicht 10 besteht aus Titannitrid (TiNₓ) und weist eine Dicke von etwa 20 nm auf. Die Abdunklungsschicht 10 bewirkt eine Verminderung der Transmission der Beschichtung 2 im sichtbaren Spektralbereich.

Die Abdunklungsschicht 10 kann alternativ auch zwischen der unteren dielektrischen Schicht 3 und der funktionellen Schicht 4 oder zwischen dem Substrat 1 und der unteren dielektrisch Schicht 3 angeordnet sein. Die Beschichtung 2 kann alternativ auch mehrere Abdunklungsschichten 10 aufweisen.

Durch die Abdunklungsschicht 10 wird die Lichttransmission der Beschichtung 2 vermindert. Ist das Substrat 1 getönt, so wird die Lichttransmission durch die Beschichtung 2 weiter reduziert. Es ist daher möglich, sehr dunkle Scheiben zu realisieren, beispielsweise mit einer Transmission im sichtbaren Spektralbereich von kleiner als 10 %. Scheiben mit einer dermaßen geringen Transmission sind alleine durch ein getöntes Substrat schwer herzustellen, weil Gläser mit einer so starken Tönung kommerziell typischerweise nicht zur Verfügung stehen. Im Gegensatz zu einer Beschichtung mit einer transmissionsmindernden funktionellen Schicht (beispielsweise auf Basis von Nickel, Chrom, Zirkonium, Tantal oder Niob) auf einem klaren Substrat, weisen herstellungsbedingte Schichtdefekte der erfindungsgemäßen Beschichtung 2 auf einem getönten Substrat 1 einen geringeren Kontrast auf. Schichtdefekte fallen dem Betrachter daher weniger störend auf. Das sind große Vorteile der vorliegenden Erfindung.

Fig. 2 zeigt einen Querschnitt durch eine weitere Ausgestaltung der erfindungsgemäßen Scheibe mit dem Substrat 1 und der Wärmestrahlung reflektierenden Beschichtung 2. Das Substrat 1 ist wie in Figur 1 ausgebildet. Die Beschichtung 2 umfasst eine untere dielektrische Schicht 3, eine Abdunklungsschicht 10, eine funktionelle Schicht 4, eine obere funktionelle Schicht 5 und eine Antireflexionsschicht 6. Die Schichten sind in der angegebenen Reihenfolge mit wachsendem Abstand zum Substrat 1 angeordnet.

Die untere dielektrische Schicht 3 ist eine Haftschicht aus Aluminium-dotiertem Siliziumdioxid (SiO₂:Al) und weist eine Dicke von etwa 30 nm auf. Die funktionellen Schicht 4 besteht aus Indium-Zinn-Oxid (ITO) und weist eine Dicke von etwa 120 nm auf. Die obere dielektrische Schicht 5 ist eine Barriereschicht zur Regulierung der Sauerstoffdiffusion während einer Temperaturbehandlung der Scheibe. Die Barriereschicht 5 besteht aus Aluminium-dotiertem Siliziumnitrid (Si₃N₄:Al) und weist eine Dicke von etwa 10 nm auf. Die Antireflexionsschicht 6 besteht aus Aluminium-dotiertem Siliziumdioxid (SiO₂:Al) und weist eine Dicke von etwa 40 nm auf.

Die Abdunklungsschicht 10 zwischen der unteren dielektrischen Schicht 3 und der funktionellen Schicht 4 besteht aus Titannitrid (TiNₓ) und weist eine Dicke von etwa 20 nm auf. Die Abdunklungsschicht 10 bewirkt eine Verminderung der Transmission der Beschichtung 2 im sichtbaren Spektralbereich.

Die Abdunklungsschicht 10 kann alternativ auch an einer anderen Position aufgebracht sein, beispielsweise zwischen der funktionellen Schicht 4 und der oberen dielektrischen Schicht 5, zwischen der oberen dielektrischen Schicht 5 und der Antireflexionsschicht 6 oder zwischen dem Substrat 1 und der unteren dielektrischen Schicht 3. Die Beschichtung 2 kann alternativ auch mehrere Abdunklungsschichten 10 aufweisen.

Fig. 3 zeigt einen Querschnitt durch eine weitere Ausgestaltung der erfindungsgemäßen Scheibe mit dem Substrat 1 und der Wärmestrahlung reflektierenden Beschichtung 2. Die Beschichtung 2 umfasst wie in Figur 2 eine untere dielektrische Schicht 3 (Haftschicht), eine funktionelle Schicht 4, eine obere dielektrische Schicht 5 (Barriereschicht) und eine Antireflexionsschicht 6. Die Schichten 3, 4, 5 und 6 sind wie in Figur 2 ausgebildet. Die Beschichtung 2 umfasst außerdem oberhalb der Antireflexionsschicht 6 eine Abdeckschicht 7. Die Abdeckschicht 7 enthält beispielsweise Ta₂O₅ oder TiO₂ und weist eine Dicke von 10 nm auf. Durch die Abdeckschicht wird die Beschichtung 2 vorteilhaft vor mechanischer Beschädigung, insbesondere vor Verkratzen geschützt.

Die Beschichtung 2 umfasst außerdem drei Abdunklungsschichten 10. Die erste Abdunklungsschicht 10 ist zwischen dem Substrat 1 und der unteren dielektrischen Schicht 3 angeordnet. Die zweite Abdunklungsschicht 10 ist zwischen der unteren dielektrischen Schicht 3 und der funktionellen Schicht 4 angeordnet. Die dritte Abdunklungsschicht 10 ist zwischen der funktionellen Schicht 4 und der oberen dielektrischen Schicht 5 angeordnet. Die Abdunklungsschichten 10 bestehen aus TiNₓ und weisen Dicken zwischen 10 nm und 15 nm auf. Durch drei erfindungsgemäße Abdunklungsschichten 10 wird die Lichttransmission stärker reduziert als durch eine einzelne Abdunklungsschicht 10, ohne dass die vorteilhaften optischen Eigenschaften infolge einer zu dicken Abdunklungsschicht 10 verloren gehen.

Fig. 4 zeigt einen Querschnitt durch eine erfindungsgemäße Scheibe mit Wärmestrahlung reflektierender Beschichtung 2. Die Scheibe ist als Seitenscheibe eines Kraftfahrzeugs vorgesehen. Das Substrat 1 weist eine Dicke von 3,15 mm auf. Das Substrat 1 besteht aus getöntem Kalk-Natron-Glas und weist eine Transmission von etwa 14 % im sichtbaren Spektralbereich auf. Die Scheibe ist thermisch vorgespannt und gebogen, wie es für Seitenscheibem im Fahrzeugbereich üblich ist.

Die Beschichtung 2 ist auf der innenraumseitigen Oberfläche des Substrat 1 aufgebracht. Dort ist die vorteilhafte Wirkung der Beschichtung 2 auf den thermischen Komfort im Innenraum des Fahrzeugs besonders ausgeprägt. Die Beschichtung 2 reflektiert einen Teil der über die Scheibe einfallenden Sonnenstrahlung, insbesondere im Infrarotbereich. Die von der warmen Scheibe in Richtung des Fahrzeuginnenraums ausgesandte Wärmestrahlung wird außerdem durch die niedrige Emissivität der Beschichtung 2 zumindest teilweise unterdrückt. Dadurch wird der Innenraum im Sommer weniger stark erwärmt. Im Winter wird die vom Innenraum ausgehende Wärmestrahlung reflektiert. Die kalte Scheibe wirkt daher weniger stark als unangenehme Wärmesenke. Außerdem kann die benötigte Heizleistung der Klimaanlage reduziert werden, was zu einer erheblichen Energieersparnis führt.

Die Beschichtung 2 wird bevorzugt vor dem Biegen des Substrats 1 auf das plane Substrat 1 aufgebracht. Die Beschichtung eines planen Substrats ist technisch deutlich einfacher als die Beschichtung eines gebogenen Substrats. Das Substrat 1 wird danach typischerweise auf eine Temperatur von 500°C bis 700°C, beispielsweise 640°C erhitzt. Die Temperaturbehandlung ist einerseits erforderlich, um das Substrat 1 zu biegen. Andererseits wird insbesondere die Emissivität der Beschichtung 2 regelmäßig durch die Temperaturbehandlung verbessert. Die als Barriereschicht ausgebildete obere dielektrische Schicht 5 beeinflusst das Ausmaß der Oxidation der funktionellen Schicht 4 während der Temperaturbehandlung. Der Sauerstoffgehalt der funktionellen Schicht 4 ist nach der Temperaturbehandlung ausreichend gering, damit die Beschichtung 2 einem Biegeprozess unterzogen werden kann. Ein zu hoher Sauerstoffgehalt würde zu einer Beschädigung der funktionellen Schicht 4 beim Biegen führen. Der Sauerstoffgehalt der funktionellen Schicht 4 ist nach der Temperaturbehandlung andererseits ausreichend hoch für eine niedrige Emissivität.

Die Beschichtung 2 ist wie in Figur 2 ausgebildet. Durch die Abdunklungsschicht 10 wird die Lichttransmission durch die Scheibe weiter reduziert. Die Scheibe mit der Beschichtung 2 weist somit eine Transmission im sichtbaren Spektralbereich von kleiner als 10 % auf. Solch dunkle (hintere) Seitenscheiben können aus thermischen und/oder ästhetischen Gründen gewünscht sein. Die erfindungsgemäße Abdunklungsschicht 10 ist aufgrund ihrer Korrosions- und Oxidationsbeständigkeit dazu geeignet, die Temperaturbehandlung und den Biegeprozess unbeschadet zu überstehen.

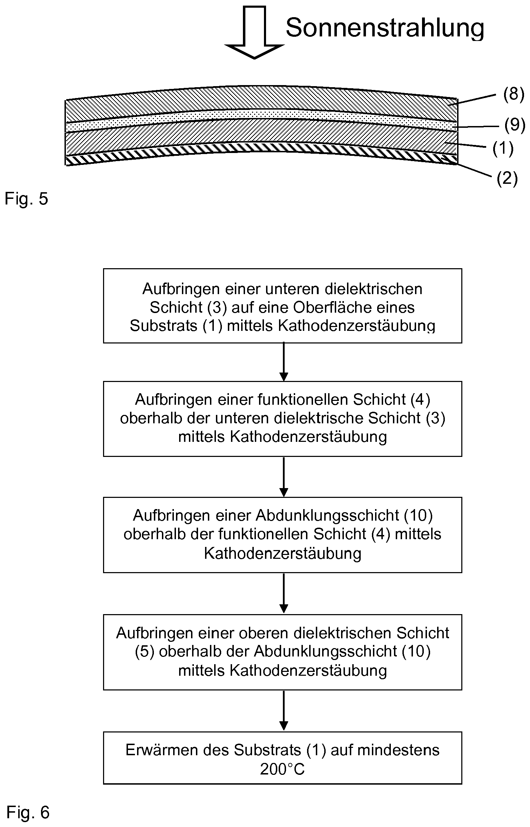

Fig. 5 zeigt einen Querschnitt durch eine erfindungsgemäße Scheibe mit Wärmestrahlung reflektierender Beschichtung 2 als Teil einer Verbundscheibe. Das Substrat 1 ist über eine thermoplastische Zwischenschicht 9 mit einer Deckscheibe 8 verbunden. Die Verbundscheibe ist als Dachscheibe für ein Kraftfahrzeug vorgesehen. Die Verbundscheibe ist gebogen, wie es für Scheiben im Automobilbereich üblich ist. In Einbaulage der Verbundscheibe ist die Deckscheibe 8 der äußeren Umgebung und das Substrat 1 dem Fahrzeuginnenraum zugewandt. Die innenraumseitige Oberfläche des Substrats 1, welche von der Deckscheibe 8 und der thermoplastischen Zwischenschicht 9 abgewandt ist, ist mit der erfindungsgemäßen Beschichtung 2 versehen. Die Substrat 1 und die Deckscheibe 8 bestehen aus Kalk-Natron-Glas und weisen jeweils eine Dicke von 2,1 mm auf. Die thermoplastische Zwischenschicht 9 enthält Polyvinylbutyral (PVB) und weist eine Dicke von 0,76 mm auf.

Das Substrat 1, die Deckscheibe 8 und die thermoplastische Zwischenschicht 9 sind getönt. Durch die Beschichtung 2 wird die Lichttransmission weiter vermindert. Somit können sehr dunkle Verbundscheiben realisiert werden.

Fig. 6 zeigt ein Flussdiagramm eines Ausführungsbeispiels des erfindungsgemäßen Verfahrens zur Herstellung einer Scheibe mit Wärmestrahlung reflektierender Beschichtung 2.

### Beispiele

Es wurden erfindungsgemäße Scheiben mit Wärmestrahlung reflektierender Beschichtung 2 hergestellt. Die genauen Schichtenfolgen mit den verwendeten Materialen und Schichtdicken der Beispiele 1 bis 8 sind in Tabelle 2 und Tabelle 3 dargestellt. Das Substrat 1 bestand aus getöntem Kalk-Natron-Glas und wies eine Transmission im sichtbaren Spektralbereich von 25 % auf. Die Abdunklungsschichten 10 enthielten Titannitrid. Titannitrid weist (bezogen auf einen Festkörper) einen Schmelzpunkt von 2950 °C und einen spezifischen elektrischen Widerstand von 20 µOhm*cm auf. Die Beispiele unterschieden sich durch die Anzahl, die Dicke sowie die Position der Abdunklungsschichten 10.

In allen Beispielen war das Substrat 1 zunächst plan und wurde mit der mittels Kathodenzerstäubung mit der erfindungsgemäßen Beschichtung 2 versehen. Das Substrat 1 mit der Beschichtung 2 wurde anschließend für 10 Minuten einer Temperaturbehandlung bei 640°C unterzogen, dabei gebogen und mit einem Krümmungsradius von etwa 30 cm versehen.

**Tabelle 2**

| Bezugszeichen | | Material | Dicke | | | |
|---|---|---|---|---|---|---|
| | | | Beispiel 1 | Beispiel 2 | Beispiel 3 | Beispiel 4 |
| 2 | 6 | SiO₂:Al | 70 nm | 70 nm | 70 nm | 70 nm |
| | 10 | TiNₓ | - | - | - | - |
| | 5 | Si₃N₄:Al | 20 nm | 20 nm | 20 nm | 20 nm |
| | 10 | TiNₓ | 5 nm | 10 nm | 10 nm | - |
| | 4 | ITO | 120 nm | 120 nm | 120 nm | 120 nm |
| | 10 | TiNₓ | 5 nm | 10 nm | - | 10 nm |
| | 3 | SiO₂:Al | 35 nm | 35 nm | 35 nm | 35 nm |
| 1 | | Glas | 2,1 mm | 2,1 mm | 2,1 mm | 2,1 mm |

**Tabelle 3**

| Bezugszeichen | | Material | Dicke | | | |
|---|---|---|---|---|---|---|
| | | | Beispiel 5 | Beispiel 6 | Beispiel 7 | Beispiel 8 |
| 2 | 6 | SiO₂:Al | 70 nm | 70 nm | 70 nm | 70 nm |
| | 10 | TiNₓ | - | - | - | 20 nm |
| | 5 | Si₃N₄:Al | 20 nm | 20 nm | 20 nm | 20 nm |
| | 10 | TiNₓ | 20 nm | 20 nm | 30 nm | - |
| | 4 | ITO | 120 nm | 120 nm | 120 nm | 120 nm |
| | 10 | TiNₓ | - | 20 nm | - | - |
| | 3 | SiO₂:Al | 35 nm | 35 nm | 35 nm | 35 nm |
| 1 | | Glas | 2,1 mm | 2,1 mm | 2.1 mm | 2.1 mm |

Die Beobachtungen an den Testscheiben sind in Tabelle 6 zusammengefasst. R_{Quadrat} ist dabei der Flächenwiderstand der Beschichtung 2. T_{L} bezeichnet die Transmission der Scheiben für sichtbares Licht. R_{L} bezeichnet die Reflektivität der Scheiben für sichtbares Licht. A_{L} bezeichnet die Absorption der Scheiben für sichtbares Licht. Der optische Zustand der Beschichtung wird insbesondere durch Trübungen ("Haze") sowie Risse beeinflusst.

Durch die erfindungsgemäßen Beschichtungen 2 mit den Abdunklungsschichten 10 wird die Transmission der Scheibe weiter reduziert. Die Temperaturbehandlung beim Biegen der Scheibe führt zu einer Verringerung des Flächenwiderstandes und damit zu einer verminderten Emissivität. Dabei wird die Abdunklungsschicht 10 nicht oxidiert, was zu einer deutlichen Erhöhung der Transmission T_{L} führen würde. Der Biegeprozess führt auch nicht zu einer Beschädigung der Beschichtung, so dass der optische Zustand der Schicht in allen Fällen gut ist.

### Vergleichsbeispiele

Die Vergleichsbeispiele unterschieden sich von den erfindungsgemäßen Beispielen durch die Wärmestrahlung reflektierende Beschichtung 2. Die Beschichtungen umfassten wie in den Beispielen die untere dielektrische Schicht 3, die funktionelle Schicht 4, die obere dielektrische Schicht 5 und die Antireflexionsschicht 6. Die Beschichtungen umfassten aber keine erfindungsgemäßen Abdunklungsschichten 10. Stattdessen wies jede Beschichtung zwei Schichten aus einem Material auf, welches nicht die erfindungsgemäßen Anforderungen für die Abdunklungsschicht erfüllte (vgl. Tabelle 5, in der die entsprechenden Schmelzpunkte T_{S} und spezifischen elektrischen Leitfähigkeiten ρ zusammengefasst sind).

Die genauen Schichtenfolgen mit den verwendeten Materialen und Schichtdicken der Vergleichsbeispiele 1 bis 3 sind in Tabelle 4 dargestellt. Die Beobachtungen an den Testscheiben sind in Tabelle 6 zusammengefasst.

**Tabelle 4**

| | Material (Dicke) | | |
|---|---|---|---|
| Bezugszeichen | Vergleichsbeispiel 1 | Vergleichsbeispiel 2 | Vergleichsbeispiel 3 |
| 6 | SiO₂:Al (70 nm) | SiO₂:Al (70 nm) | SiO₂:Al (70 nm) |
| 5 | Si₃N₄:Al (20 nm) | Si₃N₄:Al (20 nm) | Si₃N₄:Al (20 nm) |
| | NiCr (10 nm) | Ti (10 nm) | NiCrN (10 nm) |
| 4 | ITO (120 nm) | ITO (120 nm) | ITO (120 nm) |
| | NiCr (10 nm) | Ti (10 nm) | NiCrN (10 nm) |
| 3 | SiO₂:Al (35 nm) | SiO₂:Al (35 nm) | SiO₂:Al (35 nm) |
| 1 | Glas (2,1 mm) | Glas (2,1 mm) | Glas (2,1 mm) |

**Tabelle 5**

| | T_{S} /°C | ρ /µΩcm |
|---|---|---|
| NiCr | 1400 | 100 |
| Ti | 1660 | 43 |

**Tabelle 6**

| | vor Temperaturbehandlung | | nach Temperaturbehandlung und Biegen | | | | |
|---|---|---|---|---|---|---|---|
| | R_{Quadrat} [Ohm / Quadrat] | T_{L} [%] | R_{Quadrat} [Ohm / Quadrat] | T_{L} [%] | R_{L} [%] | A_{L} [%] | optischer Zustand der Beschichtung |
| Beispiel 1 | 56 | 20,0 | 16 | 22,8 | 3,6 | 73,6 | gut |
| Beispiel 2 | 55 | 15,7 | 17 | 18,8 | 2,8 | 78,4 | gut |
| Beispiel 3 | 53 | 20,8 | 16 | 22,5 | 1,5 | 76,0 | gut |
| Beispiel 4 | 53 | 19,7 | 16 | 22,2 | 4,9 | 72,9 | gut |
| Beispiel 5 | 48 | 16,7 | 19 | 18,8 | 5,2 | 76,0 | gut |
| Beispiel 6 | 50 | 11,2 | 18 | 13,2 | 1,7 | 85,1 | gut |
| Beispiel 7 | 28 | 13,4 | 16 | 15,8 | 0,6 | 83,6 | gut |
| Beispiel 8 | 47 | 15,6 | 21 | 18,9 | 0,8 | 80,3 | gut |
| Vergleichs -beispiel 1 | 35 | 5,9 | 12 | 6,9 | 5,4 | 87,7 | nicht akzeptabel |
| Vergleichs -beispiel 2 | 52 | 14,6 | 18 | 25,8 | 6,0 | 68,2 | nicht akzeptabel |
| Vergleichs -beispiel 3 | 44 | 6,7 | 25 | 6,6 | 9,8 | 83,6 | nicht akzeptabel |

Die nicht erfindungsgemäßen Abdunklungsschichten aus NiCr, Ti beziehungsweise NiCrN werden durch die Temperaturbehandlung mit dem Biegeprozess beschädigt, so dass der optische Zustand der Beschichtung in allen Fällen für Kunden im Automobilbereich nicht akzeptabel war. Zudem sind insbesondere die Absorberschichten aus Ti nicht ausreichend oxidationsbeständig, so dass sie nach der Temperaturbehandlung eine deutlich erhöhte Transmission T_{L} aufweisen.

Aus der Tabelle 6 ist außerdem ersichtlich, dass insbesondere die Transmission durch die Dicke der Abdunklungsschichten 10 beeinflusst werden kann. Daraus ergeben sich die bevorzugten Bereiche für die Dicke der Abdunklungsschicht 10.

Durch die erfindungsgemäßen Abdunklungsschichten 10 wird einer Verringerung der Transmission der Wärmestrahlung reflektierenden Beschichtung erreicht. Die

Abdunklungsschichten 10 sind dabei ausreichend korrosions- und oxidationsbeständig, um einer Temperaturbehandlung und einen Biegeprozess ohne Beschädigungen zu überstehen. Dieses Ergebnis war für den Fachmann unerwartet und überraschend.

### Bezugszeichenliste:

- (1): Substrat
- (2): Wärmestrahlung reflektierende Beschichtung
- (3): untere dielektrische Schicht
- (4): funktionelle Schicht
- (5): obere dielektrische Schicht
- (6): Antireflexionsschicht
- (7): Abdeckschicht
- (8): Deckscheibe
- (9): thermoplastische Zwischenschicht
- (10): Abdunklungsschicht

## Patentansprüche

1. Scheibe mit Wärmestrahlung reflektierender Beschichtung, umfassend ein Substrat (1) und mindestens eine Wärmestrahlung reflektierende Beschichtung (2) auf mindestens einer der Oberflächen des Substrats (1), wobei die Beschichtung (2) ausgehend vom Substrat (1) zumindest
- eine untere dielektrische Schicht (3),
- eine funktionelle Schicht (4), die zumindest ein transparentes, elektrisch leitfähiges Oxid enthält, und
- eine obere dielektrische Schicht (5)
umfasst,
und wobei mindestens eine Abdunklungsschicht (10) zwischen der unteren dielektrischen Schicht (3) und der funktionellen Schicht (4) und/oder zwischen der funktionellen Schicht (4) und der oberen dielektrischen Schicht (5) angeordnet ist,
und wobei die Abdunklungsschicht (10) zumindest ein Metall, ein Metallnitrid und/oder ein Metallcarbid mit einem Schmelzpunkt von größer als 1900 °C und einem spezifischen elektrischen Widerstand von kleiner als 500 µOhm*cm enthält,
und wobei die Dicke der Abdunklungsschicht (10) von 2 nm bis 50 nm beträgt.

2. Scheibe nach Anspruch 1, die dafür vorgesehen ist, einen Innenraum von einer äußeren Umgebung abzutrennen, wobei die Beschichtung (2) auf der Oberfläche des Substrats (1) angeordnet ist, die dafür vorgesehen ist, in Einbaulage der Scheibe dem Innenraum zugewandt zu sein.

3. Scheibe nach Anspruch 1 oder 2, die eine Transmission in sichtbaren Spektralbereich von kleiner 25 %, bevorzugt kleiner 15 %, besonders bevorzugt kleiner 10%, ganz besonders bevorzugt kleiner 8 % und insbesondere kleiner 6% aufweist.

4. Scheibe nach einem der Ansprüche 1 bis 3, wobei das Substrat (1) eine Transmission im sichtbaren Spektralbereich von kleiner als 15 % und die Scheibe mit der Wärmestrahlung reflektierenden Beschichtung (2) eine Transmission von kleiner als 10 % aufweist, und wobei bevorzugt das Substrat (1) eine Transmission im sichtbaren Spektralbereich von kleiner als 10 % und die Scheibe mit der Wärmestrahlung reflektierenden Beschichtung (2) eine Transmission von kleiner als 7 %, insbesondere kleiner als 6 % aufweist.

5. Scheibe nach einem der Ansprüche 1 bis 4, wobei die Dicke der Abdunklungsschicht (10) von 5 nm bis 40 nm beträgt.

6. Scheibe nach einem der Ansprüche 1 bis 5, wobei das Metall, das Metallnitrid oder das Metallcarbid der Abdunklungsschicht (10) aus den Gruppen IV B, V B und VI B des Periodensystems gewählt ist.

7. Scheibe nach einem der Ansprüche 1 bis 6, wobei der Schmelzpunkt des Metalls, des Metallnitrids und/oder des Metallcarbids größer als 2200 °C, bevorzugt größer als 2500 °C beträgt und wobei der spezifische elektrische Widerstand des Metalls, des Metallnitrids und/oder des Metallcarbids bevorzugt kleiner als 200 µOhm*cm beträgt.

8. Scheibe nach einem der Ansprüche 1 bis 7, wobei die funktionelle Schicht (4) zumindest Fluor-dotiertes Zinnoxid, Antimon-dotiertes Zinnoxid und / oder Indium-Zinn-Oxid enthält und bevorzugt eine Dicke von 40 nm bis 200 nm, besonders bevorzugt von 90 nm bis 150 nm aufweist.

9. Scheibe nach einem der Ansprüche 1 bis 8, wobei die obere dielektische Schicht (5) ein Material mit einem Brechungsindex von 1,7 bis 2,3 enthält, bevorzugt zumindest ein Oxid und / oder ein Nitrid, besonders bevorzugt Siliziumnitrid und ganz besonders bevorzugt Aluminium-dotiertes Siliziumnitrid, Zirkonium-dotiertes Siliziumnitrid oder Bor-dotiertes Siliziumnitrid und bevorzugt eine Dicke von 5 nm bis 50 nm aufweist.

10. Scheibe nach einem der Ansprüche 1 bis 9, wobei die untere dielektrische Schicht (3) zumindest ein Oxid oder Nitrid, bevorzugt Siliziumoxid oder Siliziumnitrid, besonders bevorzugt Aluminium-dotiertes Siliziumdioxid, Zirkonium-dotiertes Siliziumdioxid oder Bor-dotiertes Siliziumdioxid enthält und bevorzugt eine Dicke von 10 nm bis 150 nm, besonders bevorzugt von 15 nm bis 50 nm aufweist.

11. Scheibe nach einem der Ansprüche 1 bis 10, wobei oberhalb der oberen dielektrischen Schicht (5) eine Antireflexionsschicht (6) angeordnet ist, welche bevorzugt zumindest ein Oxid, besonders bevorzugt ein Oxid mit einem Brechungsindex kleiner oder gleich 1,8, ganz besonders bevorzugt Siliziumdioxid, insbesondere Aluminium-dotiertes Siliziumdioxid, Zirkonium-dotiertes Siliziumdioxid oder Bor-dotiertes Siliziumdioxid enthält und welche bevorzugt eine Dicke von 20 nm bis 150 nm, besonders bevorzugt von 40 nm bis 100 nm aufweist.

12. Scheibe nach einem der Ansprüche 1 bis 11, wobei die Beschichtung (2) als oberste Schicht eine Abdeckschicht (7) umfasst, die zumindest ein Oxid, bevorzugt zumindest TiO₂, ZrO₂, HfO₂, Nb₂O₅, Ta₂O₅, Cr₂O₃, WOₐ und / oder CeO₂ enthält und die bevorzugt eine Dicke von 2 nm bis 50 nm aufweist.

13. Scheibe nach einem der Ansprüche 1 bis 12, wobei das Substrat (1) über zumindest eine thermoplastische Zwischenschicht (9) mit einer Deckscheibe (8) zu einer Verbundscheibe verbunden ist und wobei die Beschichtung (2) auf der von der Deckscheibe (8) abgewandten Oberfläche des Substrats (1) angeordnet ist.

14. Verfahren zur Herstellung einer Scheibe mit Wärmestrahlung reflektierender Beschichtung (2), wobei auf ein Substrat (1) nacheinander zumindest
(a) eine untere dielektrische Schicht (3),
(b) eine funktionelle Schicht (4), die zumindest ein transparentes, elektrisch leitfähiges Oxid enthält, und
(c) eine obere dielektrische Schicht (5)
aufgebracht werden und wobei zwischen Verfahrensschritt (a) und (b) und/oder zwischen Verfahrensschritt (b) und (c) mindestens eine Abdunklungsschicht (10) aufgebracht wird, die zumindest ein Metall, ein Metallnitrid und/oder ein Metallcarbid mit einem Schmelzpunkt von größer als 1900 °C und einem spezifischen elektrischen Widerstand von kleiner als 500 µOhm*cm enthält und deren Dicke von 2 nm bis 50 nm beträgt.

15. Verfahren nach Anspruch 14, wobei das Substrat (1) mit der Beschichtung (2) auf eine Temperatur von mindestens 200 °C erhitzt wird.

16. Verwendung der Scheibe nach einem der Ansprüche 1 bis 13 als Scheibe oder als Bestandteil einer Scheibe, insbesondere als Bestandteil einer Isolierverglasung oder einer Verbundscheibe, in Gebäuden, insbesondere im Zugangs- oder Fensterbereich, als Brandschutztür, als Einbauteil in Möbeln und Geräten, insbesondere elektronischen Geräten mit Kühl- oder Heizfunktion, beispielsweise als Ofentür oder Kühlschranktür, oder in Fortbewegungsmitteln für den Verkehr auf dem Lande, in der Luft oder zu Wasser, insbesondere in Zügen, Schiffen und Kraftfahrzeugen beispielsweise als Heckscheibe, Seitenscheibe und / oder Dachscheibe.

## Claims

1. Pane with thermal radiation reflecting coating, comprising a substrate (1) and at least one thermal radiation reflecting coating (2) on at least one of the surfaces of the substrate (1), wherein the coating (2), starting from the substrate (1), comprises at least
- one lower dielectric layer (3),
- one functional layer (4) that contains at least one transparent, electrically conductive oxide, and
- one upper dielectric layer (5),
and wherein at least one darkening layer (10) is arranged between the lower dielectric layer (3) and the functional layer (4) and/or between the functional layer (4) and the upper dielectric layer (5),
and wherein the darkening layer (10) contains at least one metal, one metal nitride, and/or one metal carbide with a melting point greater than 1900 °C and a specific electrical resistivity less than 500 µOhm*cm,
and wherein the thickness of the darkening layer (10) is from 2 nm to 50 nm.

2. Pane according to claim 1, which is provided to separate an interior space from an external environment, wherein the coating (2) is arranged on the surface of the substrate (1) that is intended to be turned toward the interior in the installed position of the pane.

3. Pane according to claim 1 or 2, which has a transmittance in the visible spectral range of less than 25%, preferably less than 15%, particularly preferably less than 10%, most particularly preferably less than 8%, and in particular less than 6%.

4. Pane according to one of claims 1 through 3, wherein the substrate (1) has a transmittance in the visible spectral range of less than 15% and the pane with the thermal radiation reflecting coating (2) has a transmittance of less than 10%, and wherein, preferably, the substrate (1) has a transmittance in the visible spectral range of less than 10% and the pane with the thermal radiation reflecting coating (2) has a transmittance of less than 7%, in particular less than 6%.

5. Pane according to one of claims 1 through 4, wherein the thickness of the darkening layer (10) is from 5 nm to 40 nm.

6. Pane according to one of claims 1 through 5, wherein the metal, the metal nitride, or the metal carbide of the darkening layer (10) is selected from the groups IV B, V B, and VI B of the periodic system.

7. Pane according to one of claims 1 through 6, wherein the melting point of the metal, of the metal nitride, and/or of the metal carbide is greater than 2200 °C, preferably greater than 2500 °C and wherein the specific electrical resistivity of the metal, of the metal nitride, and/or of the metal carbide is preferably less than 200 µohm*cm.

8. Pane according to one of claims 1 through 7, wherein the functional layer (4) contains at least fluorine-doped tin oxide, antimony-doped tin oxide, and / or indium tin oxide and preferably has a thickness from 40 nm to 200 nm, particularly preferably from 90 nm to 150 nm.

9. Pane according to one of claims 1 through 8, wherein the upper dielectric layer (5) contains a material with a refractive index from 1.7 to 2.3, preferably at least one oxide and / or one nitride, particularly preferably silicon nitride and most particularly preferably aluminum-doped silicon nitride, zirconium-doped silicon nitride, or boron-doped silicon nitride and preferably has a thickness from 5 nm to 50 nm.

10. Pane according to one of claims 1 through 9, wherein the lower dielectric layer (3) contains at least one oxide or nitride, preferably silicon oxide or silicon nitride, particularly preferably aluminum-doped silicon dioxide, zirconium-doped silicon dioxide, or boron-doped silicon dioxide and preferably has a thickness from 10 nm to 150 nm, particularly preferably from 15 nm to 50 nm.

11. Pane according to one of claims 1 through 10, wherein an antireflection layer (6) is arranged above the upper dielectric layer (5), which antireflection layer preferably contains at least one oxide, particularly preferably one oxide with a refractive index less than or equal to 1.8, most particularly preferably silicon dioxide, in particular aluminum-doped silicon dioxide, zirconium-doped silicon dioxide, or boron-doped silicon dioxide and which preferably has a thickness from 20 nm to 150 nm, particularly preferably from 40 nm to 100 nm.

12. Pane according to one of claims 1 through 11, wherein the coating (2) comprises as its uppermost layer a cover layer (7), which contains at least one oxide, preferably at least TiO₂, ZrO₂, HfO₂, Nb₂O₅, Ta₂O₅, Cr₂O₃, WO₃, and / or CeO₂ and which preferably has a thickness from 2 nm to 50 nm.

13. Pane according to one of claims 1 through 12, wherein the substrate (1) is bonded to a cover pane (8) via at least one thermoplastic intermediate layer (9) to form a composite pane and wherein the coating (2) is arranged on the surface of the substrate (1) facing away from the cover pane (8).

14. Method for producing a pane with thermal radiation reflecting coating (2), wherein at least
(a) one lower dielectric layer (3),
(b) one functional layer (4) that contains at least one transparent, electrically conductive oxide, and
(c) one upper dielectric layer (5)
are applied in succession on a substrate (1) and wherein between process step (a) and (b), and/or between process step (b) and (c), at least one darkening layer (10) that contains at least one metal, a metal nitride, and/or a metal carbide with a melting point greater than 1900 °C and a specific electrical resistivity less than 500 µohm*cm and whose thickness is from 2 nm to 50 nm is applied.

15. Method according to claim 14, wherein the substrate (1) with the coating (2) is heated to a temperature of at least 200 °C.

16. Use of the pane according to one of claims 1 through 13 as a pane or as a component of a pane, in particular as a component of an insulating glazing unit or a composite pane, in buildings, in particular in the access or window area, as a fire door, as a built-in component in furniture and devices, in particular electronic devices with a cooling or heating function, for example, as an oven door or refrigerator door, or in means of transportation for travel on land, in the air, or on water, in particular in trains, ships, and motor vehicles, for example, as a rear window, side window, and / or roof panel.

## Revendications

1. Vitre ayant un revêtement réfléchissant les rayonnements thermiques comprenant un substrat (1) et au moins un revêtement (2) réfléchissant les rayonnements thermiques sur au moins l'une des surfaces du substrat (1), où partant du substrat (1), le revêtement (2) comprend au moins
- une couche diélectrique inférieure (3),
- une couche fonctionnelle (4), qui contient au moins un oxyde transparent électriquement conducteur, et
- une couche supérieure (5) diélectrique,
et où au moins une couche d'assombrissement (10) est disposée entre la couche diélectrique inférieure (3) et la couche fonctionnelle (4) et/ou entre la couche fonctionnelle (4) et la couche diélectrique supérieure (5),
et où la couche d'assombrissement (10) contient au moins un métal, un nitrure métallique et/ou un carbure métallique avec un point de fusion supérieure à 1900° C et une résistance électrique spécifique inférieure à 500 µOhm*cm et où l'épaisseur de la couche d'assombrissement (10) se situe entre 2 nm et 50 nm.

2. Vitre selon la revendication 1, qui est conçue pour séparer un espace intérieur d'un environnement externe, où le revêtement (2) est disposé à la surface du substrat (1), qui en position de montage est conçue pour être dirigée vers l'espace intérieure de la vitre.

3. Vitre selon la revendication 1 ou 2, qui présente une transmission dans la plage spectrale visible inférieure à 25 %, de préférence inférieure à 15 %, plus préférablement inférieure à 10 %, de façon particulièrement préférée inférieure à 8% et tout spécialement inférieure à 6 %.

4. Vitre selon l'une des revendications 1 à 3, où le substrat (1) présente une transmission dans la plage spectrale visible inférieure à 15 % et la vitre avec le revêtement (2) réfléchissant les rayonnements thermiques présente une transmission inférieure à 10 % et/où de préférence le substrat (1) présente une transmission dans la plage spectrale visible inférieure à 10%, et la vitre avec le revêtement (2) réfléchissant les rayonnements thermiques (2) présente une transmission inférieure à 7%, en particulier inférieure à 6%.

5. Vitre selon l'une des revendications 1 à 4, où l'épaisseur de la couche d'assombrissement (10) se situe entre 5 nm et 40 nm.

6. Vitre selon l'une des revendications 1 à 5, où le métal, le nitrure métallique ou le carbure métallique de la couche d'assombrissement (10) est sélectionné à partir des groupes IV B, V B et VI B du tableau périodique.

7. Vitre selon l'une des revendications 1 à 6, où le point de fusion du métal, du nitrure métallique ou du carbure métallique est supérieur à 2200° C, de préférence supérieure à 2500° C et où la résistance électrique spécifique du métal, du nitrure métallique ou du carbure métallique est inférieure à 200 µOhm*cm.

8. Vitre selon l'une des revendications 1 à 7, où la couche fonctionnelle (4) contient au moins de l'oxyde d'étain dopé au fluor, de l'oxyde d'étain dopé à l'antimoine et/ou de l'oxyde d'indium-étain et présente de préférence une épaisseur de 40 nm à 200 nm, de façon particulièrement préférée de 90 nm à 150 nm.

9. Vitre selon l'une des revendications 1 à 8, où la couche diélectrique supérieure (5) contient un matériau avec un indice de réfraction de 1,7 à 2,3, de préférence au moins un oxyde et/ou un nitrure, de façon particulièrement préférée un nitrure de silicium et de façon plus particulièrement préférée un nitrure de silicium dopé à l'aluminium, un nitrure de silicium dopé au zirconium ou un nitrure de silicium dopé au bore et de préférence une épaisseur de 5 nm à 50 nm.

10. Vitre selon l'une des revendications 1 à 9, où la couche diélectrique inférieure (3) contient au moins un oxyde et/ou un nitrure, de préférence un oxyde de silicium ou un nitrure de silicium, de façon particulièrement préférée du dioxyde de silicium dopé à l'aluminium, du dioxyde de silicium dopé au zirconium ou du dioxyde de silicium dopé au bore et qui présente de préférence une épaisseur de 10 nm à 150 nm, de façon particulièrement préférée de 15 nm à 50 nm.

11. Vitre selon l'une des revendications 1 à 10, où une couche antireflet (6) est disposée au-dessus de la couche diélectrique supérieure (5), qui de préférence contient au moins un oxyde, plus préférablement un oxyde avec un indice de réfraction inférieure ou égale à 1,8, de façon particulièrement préférée un dioxyde de silicium, en particulier du dioxyde de silicium dopé à l'aluminium, du dioxyde de silicium dopé de zirconium ou du dioxyde de silicium dopé au bore et qui présente de préférence une épaisseur de 20 nm à 150 nm, plus préférablement de 40 nm à 100 nm.

12. Vitre selon l'une des revendications 1 à 11, où le revêtement (2) comme couche supérieure comprend une couche de couverture (7), qui contient au moins un oxyde, de préférence au moins du TiO₂, ZrO₂, HfO₂, Nb₂O₅, Ta₂O₅, Cr₂O₃, WO₃ et/ou CeO₂ et qui présente de préférence une épaisseur de 2 nm à 50 nm.

13. Vitre selon l'une des revendications 1 à 12, où le substrat (1) est relié avec une feuille de couverture (8) par le biais d'au moins un intercalaire thermoplastique (9) pour former un verre laminé et où le revêtement (2) est disposé sur la surface du substrat (1) éloignée de la feuille de couverture (8).

14. Procédure de fabrication d'une vitre ayant un revêtement (2) réfléchissant les rayonnements thermiques, ou sont déposées successivement sur un substrat :
a) une couche diélectrique inférieur (3),
b) une couche fonctionnelle (4), qui contient au moins un oxyde transparent électriquement conducteur, et
c) une couche supérieure (5) diélectrique
et où entre les étapes de fabrication a) et b) et/ou entre les étapes de I fabrication b) et c) au moins une couche d'assombrissement (10) est déposée, qui contient au moins un métal, un nitrure métallique et/ou un carbure métallique avec un point de fusion supérieur à 1900° C et une résistance électrique spécifique inférieure à 500 µOhm*cm et dont l'épaisseur se situe entre 2 nm et 50 nm.

15. Procédé selon la revendication 14, où le substrat (1) avec le revêtement (2) est chauffé à une température d'au moins 200 °C

16. Utilisation de la vitre selon l'une des revendications 1 à 13 comme vitre ou en tant que composant d'une vitre, en particulier en tant que composant d'un vitrage isolant ou un verre laminé, dans le bâtiment, en particulier dans le domaine des accès et des fenêtres, comme porte coupe-feu ou comme pièce incorporée dans le mobilier et les appareils, en particulier les appareils électroniques avec fonction de chauffage ou de refroidissement, par exemple comme porte de four ou de réfrigérateur, ou dans les moyens de transport pour la circulation sur la terre, dans l'air ou sur l'eau, en particulier dans les trains, les navires et les véhicules à moteur, par exemple comme lunette arrière, fenêtre latérale et/ou toit vitré.
